# EUROPEAN PATENT SPECIFICATION

(11) **EP 4 515 295 B1**
(45) Date of publication and mention of the grant of the patent: **25.11.2026**
(21) Application number: 23723462.0
(22) Date of filing: 27.04.2023
(51) Int. Cl.: G01V 1/18, G01V 1/147, G01V 13/00, G01M 7/08

(54) **GEOPHONE FAULT DETECTION**
GEOPHONFEHLERDETEKTION
DÉTECTION DE DÉFAILLANCE DE GÉOPHONE

(30) Priority: 29.04.2022 DK PA202270228
(43) Date of publication of application: 05.03.2025
(73) Proprietor: Dynatest A/S, 2750 Ballerup (DK)
(72) Inventor: ANCKER, Emil Vincent, 2750 Ballerup (DK); ANCKER, Jens Vincent, 2750 Ballerup (DK)
(74) Representative: Høiberg P/S
(86) International application number: PCT/EP2023/061072
(87) International publication number: WO 2023/209069

(56) References cited:
- US-A- 4 052 694
- US-A- 5 614 670
- US-A- 5 644 067

## Description

The present disclosure relates to a method of detecting fault indications in a geophone unit, a geophone unit for detecting vibrations at a test surface, and a deflectometer for detecting conditions at a test surface.

### Background

Geophones are often used for detecting such as quantifying and/or determining characteristics of, seismic waves propagating in the ground.

One example is utilization of one or more geophones for sensing conditions at a ground surface, such as conditions of pavements such as road pavements. Here, a falling weight deflectometer may be used. This comprises a force inducing arrangement that may for example comprise a drop weight and a load plate. The load plate is configured to transfer an impact force/impulse force provided by means of the drop weight to a test surface. This causes seismic waves to propagate in the pavement, and one or more geophones of the falling weight deflectometer may register/sense the vertical deflection response of the ground surface, such as the pavement surface, caused by the propagating seismic wave. Such geophones comprises a geophone sensor arrangement. This sensor arrangement senses vibrations transferred from the test surface of the ground surface and provides a first sensor output based thereon. Often, this sensor arrangement comprises a coil and a magnet configured to move relative to each other when the geophone is subjected to the vertical deflection response, and the sensor arrangement thereby provides a sensor output reflecting the vertical deflection response. The information of this output can be analysed by a computer processing arrangement, and thereby conditions of the surface subjected to the seismic waves can be determined/estimated. This solution may often be used at pavements of e.g. highways, local roads, airport pavements, harbour areas, railway tracks and/or the like. A geophone comprising the above mentioned sensor arrangement may also be referred to as an electromagnetic geophone.

However, such a geophone may suffer from that it may be relatively mechanically complex and delicate. In some cases, the geophone may thus fail over time or gradually change mechanical behaviour over time, which may influence on the reliability of the information in the output from the geophone.

A failing geophone of a falling weight deflectometer may be discovered by checking the output the geophone sensor arrangement. For example, when several geophones are used in a falling weight deflectometer, the amplitudes of a plurality of geophones may be monitored in order to confirm that the amplitudes are gradually decreasing with the distance from each geophone to the drop weight and a load plate. If this is not the case, this may indicate that a geophone failure may be present or that there is an exogenous factor influencing the measurements. The deflection measurements of the geophones may also be controlled up against modelling of evaluation pavement surfaces. However, such solutions provide that geophone failure may be detected late, and hence some data of a failing geophone that was initially thought to be credible must be disregarded. This may call for new measurements and/or provide less precise data. US4052694A discloses a known apparatus for fault diagnosis of a geophone group within a geophone group-cable complex of a geophone data acquisition system.

It is an object of the present disclosure to reduce or solve one or more of the above-mentioned problems. Additionally, or alternatively the present disclosure provides a simple and/or cost-efficient solution for geophone failure detection.

### Summary

In an **aspect** of the present disclosure, the present disclosure relates to a deflectometer, such as a falling weight deflectometer, for detecting conditions at a test surface, such as a pavement surface, for example a road surface. The deflectometer comprises:
- a force inducing arrangement comprising a drop weight and a load plate, wherein the load plate is configured to transfer an impact force to the test surface, and wherein the impact force is provided by means of the drop weight, and
- a seismic sensor arrangement comprising one or more geophone units, where each of said one or more geophone units comprises a housing and a geophone sensor arrangement arranged in the housing, wherein the geophone sensor arrangement is configured to sense vibrations transferred from said test surface and provide a first sensor output based thereon, wherein the geophone sensor arrangement comprises a coil and a magnet configured to move relative to each other when the geophone is subjected to said vibrations so as to provide said first sensor output,
the deflectometer according to this aspect comprises a fault detection system configured to detect fault conditions in/of said one or more geophones, wherein said fault detection system comprises:
- a data processing arrangement, and
- one or more further sensors comprising an electronic accelerometer configured to sense vibrations and provide a second sensor output based thereon, where said one or more further sensors is/are arranged at said one or more geophone units,

wherein the geophone sensor arrangement is configured to provide a first test response when subjected to a test signal, and wherein the one or more further sensors is/are configured to provide a second test response in response to a vibration caused by the test signal,
wherein the data processing arrangement is configured to process data based on at least information of the second test response and reference data so as to determine if a fault indication has occurred at one of said one or more geophone units, and wherein the data processing arrangement is configured to provide a fault indication output representing an indication of a fault at a geophone unit if said fault indication is determined to occur.

In another aspect of the present disclosure, the present disclosure relates to a method of detecting conditions at a test surface, such as a pavement surface, for example a road surface using a deflectometer (100), such as a falling weight deflectometer.

The deflectometer (100) according to this other aspect comprises:
- a force inducing arrangement (11) comprising a drop weight (12) and a load plate (14), wherein the load plate (14) configured to transfer an impact force to the test surface, and wherein the impact force is provided by means of the drop weight (12), and
- a seismic sensor arrangement (21) comprising one or more geophone units (1), where each of said one or more geophone units (1) comprises a housing (2, 20) and a geophone sensor arrangement (7) arranged in the housing (2, 20), wherein the geophone sensor arrangement (7) is configured to sense vibrations transferred from said test surface and provide a first sensor output (O1) based thereon, wherein the geophone sensor arrangement (7) comprises a coil (5) and a magnet (4) configured to move relative to each other when the geophone (1) is subjected to said vibrations so as to provide said first sensor output (O1).

The deflectometer (100) according to this other aspect also comprises a fault detection system configured to detect fault conditions in said one or more geophones (1), wherein said fault detection system (10, ACC) comprises:
- a data processing arrangement (10, 50), and
- one or more further sensors (ACC) comprising an electronic accelerometer configured to sense vibrations and provide a second sensor output (O2) based thereon, where said one or more further sensors (ACC) is/are arranged at said one or more geophone units (1).

The method according to this other aspect comprises the steps of:
- providing a test signal (T1) so as to induce the geophone sensor arrangement (7) to provide a first test response (O1, O3) from the geophone sensor arrangement (7),
- providing a second test response (O2) from the further sensor (ACC) in response to a vibration caused by the test signal (T1),
- processing data so as to determine if a fault indication has occurred at the geophone unit (1), wherein said processed data is based on at least reference data (REF) and information retrieved from the second test response (O2), and
- providing a fault indication output (S6, S56, S66) representing an indication of a fault at the geophone unit (1) if said fault indication is determined to occur.

Generally, it is understood that the falling weight deflectometer in embodiments of the present disclosure may be used for non-destructive testing (NDT) of ground surfaces such as for pavement structural evaluation and health monitoring. The falling weight deflectometer may be used for evaluating physical properties/ condition of surfaces such as ground surfaces, such as pavement surfaces, for example road surfaces. A road surface may comprise a pavement of e.g. highways, local roads, airport pavements, harbour areas, railway tracks and/or the like. The data acquired from the falling weight deflectometer may originate directly or indirectly from geophone(s) of the deflectometer. This data may be used for estimating pavement structural capacity. Depending on the falling weight deflectometer design it may e.g. be placed at/part of a towable trailer or it may be built into a self-propelled vehicle.

In one or more embodiments of the present disclosure the geophone or geophones may be wired or wirelessly connected to a geophone data collection arrangement, and the geophone data collection arrangement is configured to receive vibration output from one or more geophones.

The geophone data collection arrangement may hence be placed external to the one or more geophones.

In some embodiments of the present disclosure, the geophone data collection arrangement may be configured to receive vibration output from one or a plurality of discrete geophones of the falling weight deflectometer.

The force inducing arrangement may in embodiments of the present disclosure comprise a lifting arrangement configured to lift the drop weight to a height, such as a predetermined height, above a force transmission arrangement comprising the load plate.

In embodiments of the present disclosure, said drop weight may be configured to directly or indirectly impact said force transmission arrangement so as to provide a force to be transmitted to the load plate when the drop weight is released from said height.

In one or more embodiments, a control system of the falling weight deflectometer may be configured to prevent further use of the falling weight deflectometer if the fault indication output is provided, before a predefined condition is complied with.

This provides that users may be aware of a faulty geophone, and hence, the risk of collecting and/or using potentially faulty of corrupted geophone data may be reduced.

**In** one or more embodiments of the present disclosure, the predefined condition may e.g. comprise one or more of:
- that the geophone is replaced, and the fault indication output preferably no longer occurs
- that the geophone is repaired so that the fault signal no longer occurs
- that the geophone is taken out of service so that a reduced amount of geophones are used.
- That a user confirms the error so as to indicate that the user is aware of the error signal

Hence, in case the fault indication signal occurs, the drop weight may be prevented from dropping or being lifted, and/or the like.

**In** one or more embodiments of the present disclosure, the falling weight deflectometer may comprise a plurality of geophone units, wherein said geophone units are discretely arranged at a frame arrangement (16) of the falling weight deflectometer so as to detect vibrations from the test surface (15) at discretely arranged positions,
**In** one or more embodiments of the present disclosure, the falling weight deflectometer may comprise one or a plurality of geophone units as previously described and/or described below.

### Figures

Aspects of the present disclosure will be described in the following with reference to the figures in which:
- fig. 1:: illustrates a geophone unit comprising a geophone sensor arrangement and a further sensor, according to embodiments of the present disclosure,
- fig. 2:: illustrates a geophone unit comprising a geophone sensor arrangement and a further sensor, and a signal generator for providing a test signal, according to embodiments of the present disclosure,
- fig. 3:: illustrates a falling weight deflectometer according to embodiments of the present disclosure,
- figs. 4a-4b:: illustrates a geophone fixture according to embodiments of the present disclosure,
- figs. 5-6:: flow charts relating to detection of fault indications at a geophone unit according to various embodiments of the present disclosure,
- fig. 7:: illustrates test responses based on output from sensors ACC, 7 according to embodiments of the present disclosure,
- figs. 8-9:: illustrates a geophone unit according to various further embodiments of the present disclosure,
- figs. 10-12:: illustrates various embodiments of the present disclosure relating to where data processing by a processing arrangement may be provided to detect fault indications.
- fig. 13:: illustrates an embodiment of the present disclosure where a cloud based data storage is utilized, and
- figs. 14-15:: illustrates different examples of envisaged test responses where a fault indication output may be provided, according to embodiments of the present disclosure.

### Detailed description

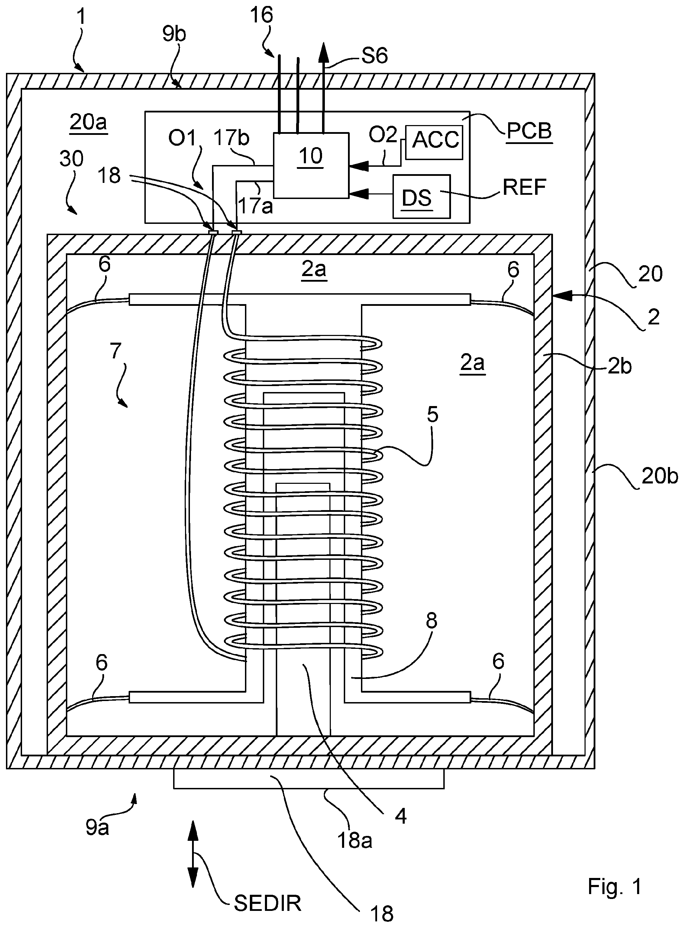

Fig. 1 illustrates schematically a geophone unit 1 according to embodiments of the present disclosure. The geophone unit 1 comprises a geophone unit housing 20. The geophone unit housing 20 comprises a housing unit wall 20b and an in interior unit housing cavity 20a that is enclosed by the unit housing wall 20b. The unit 1 housing wall 20b may be made from metal such as steel, aluminum, brass or another suitable geophone wall material.

The geophone unit housing 20 may in some embodiments of the present disclosure comprise a lid (not illustrated), or may in other ways be disassembled by means of mechanical assembling means such as comprising one or more of a thread solution in the housing, one or more screws, clips and/or the like. By disassembling the geophone unit 1 housing 20, access to the interior content of the geophone unit housing 20 is provided.

The geophone unit housing 20 may be made from metal such as steel, aluminum, brass, or the like. In other embodiments, a polymer such as a fibre reinforced polymer may be used.

The geophone unit housing 20 provides protection of the equipment in the interior 20a, e.g. mechanical protection, protection from water and/or the like.

A geophone 30 is placed inside the geophone unit housing 20. This geophone 30 comprises a geophone housing wall 2b and an interior geophone cavity 2a that is enclosed by the geophone housing wall 2b. The geophone housing wall may be made from metal such as steel, aluminum, brass or another suitable geophone wall material.

The geophone 30 comprises a geophone sensor arrangement 7 that is configured to detect/sense vibrations, such as vibrations caused by seismic waves, at a test surface.

The geophone 30 may be a geophone generally available on the market to be purchased, and may have different marking plate features defined at e.g. a data sheet provided by the manufacturer such as one or more of the following: Rated natural frequency (Hz), Damping, coil resistance (Ω), moving mass specifications (g), dimensions (mm), temperature range (°C), sensitivity (V/m/s), Spurious frequency (Hz), Response curve (V/m/s) over a frequency range, Phase curve and/or the like.

These may form basis for determining which geophone 30 type that should be placed in the unit housing 20 dependent on usage.

In embodiments of the present disclosure, the vibrations caused by seismic waves to be sensed may, in embodiments of the present disclosure, be low frequencies such as frequencies in the range of 0.5 Hz to 200 Hz, such as between 0.5 Hz to 100 Hz, for example between 1 Hz to 50 Hz.

In some embodiments of the present disclosure, the rated natural frequency of the geophone for use in the falling weight deflectometer may be between 1 Hz and 20 Hz, such as between 1.5 Hz and 10Hz, such as between 1.8 Hz and 5 Hz.

The geophone unit 1 comprising the geophone 30 may in embodiments of the present disclosure be suitable for detecting conditions at a ground, such as conditions of pavements such as road pavements. Here, a falling weight deflectometer may be used (described in more details later on) to register/sense an e.g. vertical deflection response of a ground surface, such as a pavement surface, caused by a propagating seismic wave induced by the falling weight deflectometer.

The geophone sensor arrangement 7 provides an output O1 in response to the ground movement into voltage, which may be recorded at a recording arrangement. This output O1 may be a voltage comprising information such as a frequency response, an amplitude and/or the like that may provide information enabling estimation/ calculation of properties of the ground.

The geophone sensor arrangement 7 comprises a coil 5 and a magnet 4 that is arranged inside the geophone 30 housing 2 cavity 2a. The coil 5 and the magnet 4 are configured to move relative to each other when the geophone unit 20, and hence the geophone, is subjected to vibrations such as a vertical deflection response of the ground.

Preferably, the magnet 4 is attached directly or indirectly to the geophone housing 2 so that vibrations to be detected are transferred through the geophone housing wall 2b or another vibration transferring arrangement of the geophone. The coil 5 is suspended in the housing 2 cavity 2a and is winded around a suspended mass 8. The mass 8 is attached to and suspended inside the housing 2 by means of a spring arrangement 6 comprising one or more springs. The mass 8 may in embodiments of the present disclosure comprise a ferromagnetic metal. A geophone 30 comprising such a sensor arrangement 7 may also be referred to as an electromagnetic geophone.

When the geophone unit 1, and hence the geophone 30, is subjected to vibrations, such as vertical deflections, from the ground, this causes the magnet 4 to move relative to the coil 5, thereby inducing a voltage in the coil. The magnitude of this induced voltage may be dependent on, such as proportional to, the speed or velocity of the movement.

The geophone 30 housing 2 is rigidly connected or fixed to the geophone unit housing 20, e.g., by means of one or more of an adhesive, mechanical fastening means such as screws, clamps or pop rivets and/or by means of wedging the geophone 30 in between parts of the geophone unit housing 20 and/or parts inside the geophone housing. This provides that when the geophone unit housing 20 is subjected to the vertical deflections, these are transferred as vibrations to the geophone 30 and hence the geophone sensor arrangement 7, by means of, such as through, the geophone unit housing 20.

The movement may be transferred through a bottom part 9a of the unit housing 20. One or more terminals 18 for providing an output from the geophone 30 comprising information of an output O1 from the coil 5 may be placed at an emd such as an opposite top end of the geophone 30.

In some embodiments of the present disclosure, the geophone unit 1 may comprise a dedicated vibration transferring member 18 such as comprising a receiving surface 18a configured to directly or indirectly receive the vertical deflections / vibrations and transfer them to the geophone unit housing 20, and thus to the magnet 4 to cause the magnet to move relative to the coil (and suspended mass) and thereby induce a voltage therein. The dedicated vibration transferring member 18 may be attached to or integrated in the geophone unit housing 20.

The geophone unit 1 may for example be used at a falling weight deflectometer for determining conditions at a ground, such as pavements, such as pavements of one or more of highways, local roads, airport pavements, harbour areas, railway tracks, bicycle lanes, pedestrian pavement, tiles and/or the like. Such pavements may comprise asphalt pavements, concrete pavements and/or the like.

**In** some embodiments of the present disclosure, the geophone unit 1 comprises a data processing arrangement 10 comprising one or more processing units such as one or more microprocessors, and electrical circuitry 17a, 17b connected thereto. This processing arrangement 10 may receive the output O1 by means of such electrical circuitry and forward it in a raw condition and/or processed condition by means of one or more geophone output terminals 16. Here, a receiving arrangement (not illustrated in fig 1) receives and possibly stores the data for subsequent processing to determine e.g. conditions of the pavement, if this has e.g. not been done by the processing arrangement 10 of the geophone unit.

In some embodiments of the present disclosure, the processing arrangement 10 may additionally or alternatively comprise an ADC (Analog to Digital Converter), for converting the analog signal O1 from the coil into a digital signal to be transmitted/forwarded from the geophone unit 1. The resolution of the digital signal may be adapted according to needs/desires, but may e.g. be converted into an 8 bit signal, a 12 bit signal, a 16 bit signal, or even a 20 or 24 bit signal and/or the like by means of the ADC.

In other embodiments of the present disclosure (not illustrated), the analog signal O1 from the coil may be transmitted/forwarded from the geophone unit without being digitalized.

The processing arrangement 10 may in embodiments of the present disclosure be placed on a Printed Circuit Board (PCB). The PCB is placed inside the unit housing 20a and may be directly or indirectly fixated inside the geophone unit housing 20. This may e.g. be provided by means of wedging the PCB between the unit housing 20 and the geophone housing 2. Additionally, or alternatively, the PCB fixation may be provided by means of fastening means (not illustrated) such as comprising chemical fastening means, mechanical fastening means (such as screws(s), clips, pop rivet(s) or the like), a clamping arrangement and/or the like of one or both of the housings 2, 20 or a part thereof.

According to the present disclosure, a further sensor ACC is placed inside the geophone unit housing. This further sensor ACC comprises or is an electronic accelerometer configured to sense accelerations and provide a second sensor output O2 based thereon, separate to the first sensor output O1 from the geophone sensor arrangement 7 of the geophone 30. Based on the acceleration information, vibration information can be obtained.

In embodiments of the present disclosure, the accelerometer ACC comprises a piezo based accelerometer, for example a piezo-resistance accelerometer or a piezoelectric accelerometer. In other embodiments of the present disclosure, the accelerometer ACC may comprise a capacitive accelerometer. In one or more embodiments of the present disclosure, the further sensor comprises a MEMS accelerometer.

The accelerometer ACC is also configured to sense vibrations caused by seismic waves when the unit 1 housing 20 is subjected to such. Hence, vibrations may be transferred from the unit housing 20 to the PCB, and the accelerometer ACC may be placed on this PCB, thereby detecting the vibrations. The output (O2) of the Accelerometer may comprise frequency information, an amplitude and/or the like that reflects/describes the deflection response, such as vertical deflection response that the unit housing(s) 2, 20 is subjected to.

The Accelerometer ACC may be considered redundant to the geophone sensor arrangement 7, at least to a certain degree. The geophone sensor arrangement 7 is configured to sense vibrations in a first sensing direction SEDIR, and the further sensor ACC is configured to at least sense vibrations in the same, first sensing direction SEDIR. Though, the accelerometer ACC may not, at least in some embodiments of the present disclosure, be as precise as the geophone sensor arrangement 7, may still be considered a redundant sensor that may be used for sensing fault indications related to the geophone 30.

According to embodiments of the present disclosure, the geophone unit 1 may be subjected to a test signal T1, as e.g. described in more details below according to various embodiments of the present disclosure, so as to induce the geophone sensor arrangement 7 to provide a first test response from the geophone sensor arrangement 7. This test signal T1 also provides a second test response O2 from the further sensor ACC in response to a vibration at the geophone unit caused by the test signal T1.

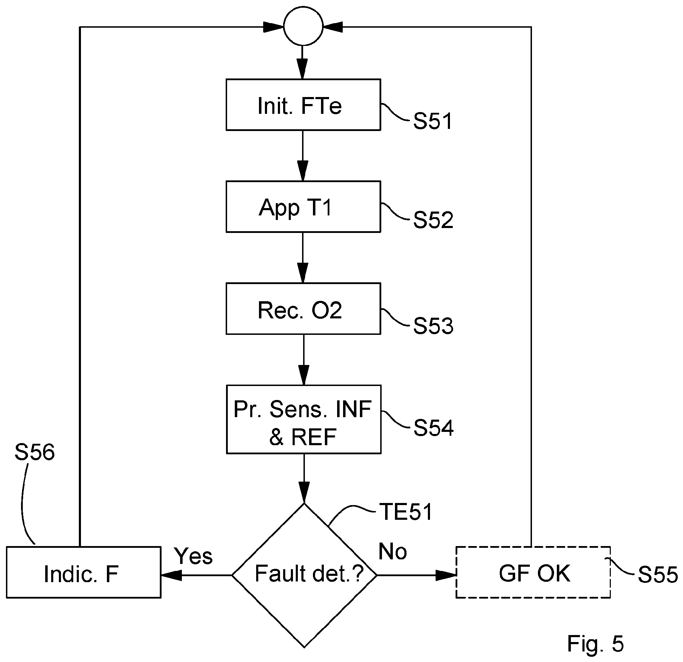

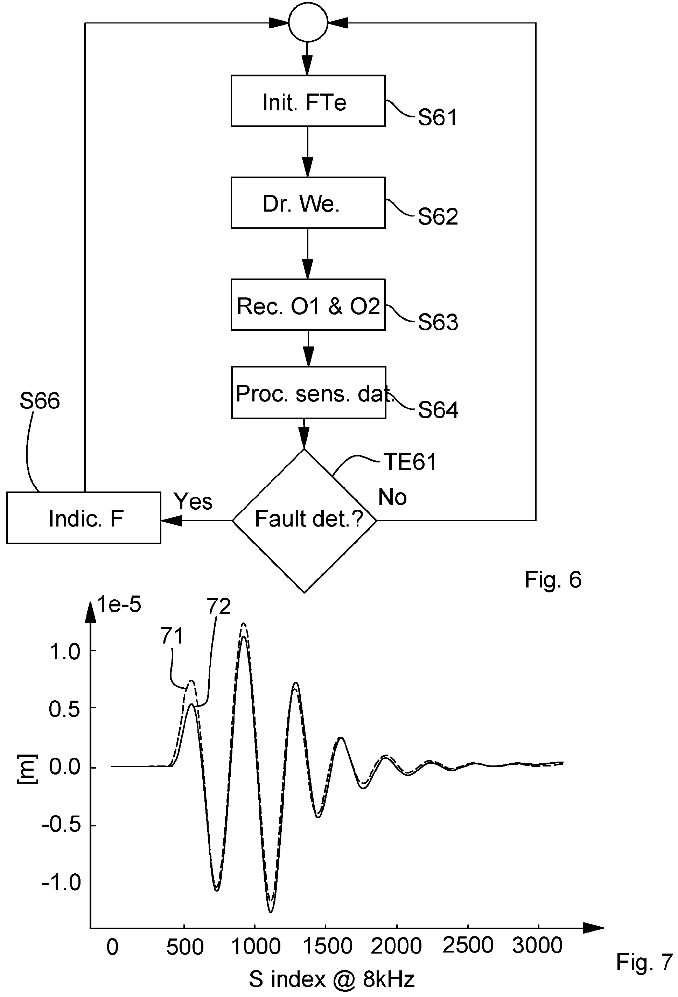

Thereby, data can be processed by a processing arrangement 10 placed in the geophone unit 1 interior 20a or exterior to and separate to the geophone unit 1. This processing of data (described in more details later on, see e.g. figs. 5 and/or 6) is provided so as to determine if a fault indication has occurred at the geophone 30. The said processing of data is based on at least reference data REF and information retrieved from the second test response.

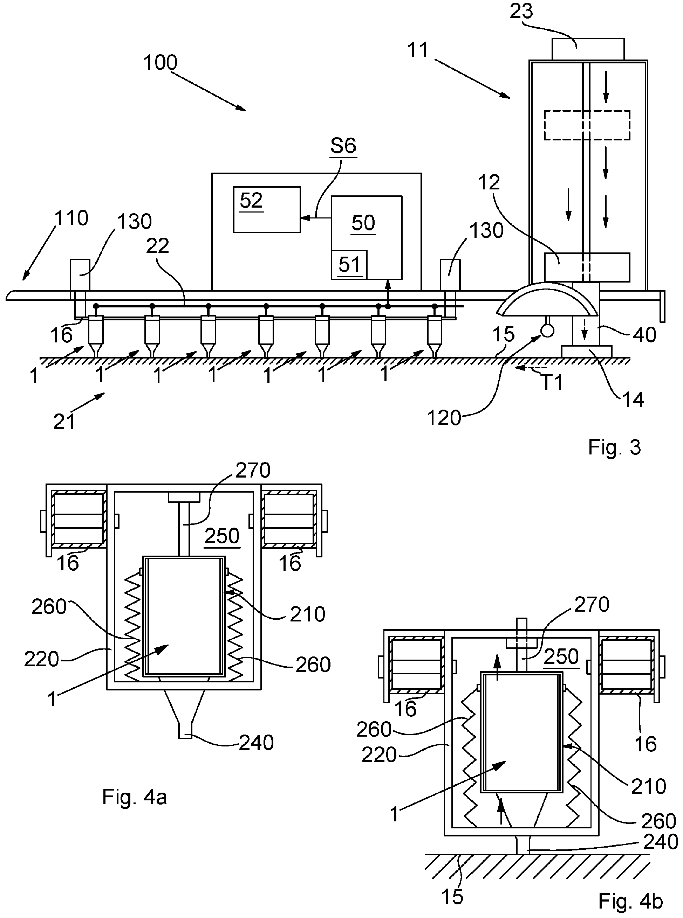

The processing may be performed by a data processing arrangement 10 comprising one or more microprocessors. This may be provided by means of the processing arrangement 10 placed internally in the geophone unit 1 housing 20, or it may be placed externally at another location than in the geophone unit housing 20, for example at a data collection system of an apparatus or system where the geophone unit is installed, for example a falling weight deflectometer. See e.g. one or more of figs. 3 and 10-14.

The reference data REF may e.g., in embodiments of the present disclosure, be data stored in a data storage DS either in the geophone unit housing (as illustrated in fig. 1), or external to the geophone unit 1, or even stored in a cloud based data storage. In some embodiments of the present disclosure, the data storage may be part of an internal memory of a micro processor of the processing arrangement 10, or it may be external thereto. Different reference data may also be stored at different locations. For example, a first data storage may be placed in the geophone unit 1 and comprise first data for use during detection of fault indications. Other reference data may additionally or alternatively be placed external to the geophone unit 1 to enable other/further detection of fault indications than the one provided at the geophone unit 1.

If the processing of the information of the accelerometer ACC output O2 and the reference data REF results in that an indication of a fault relating to the geophone is determined to occur, a fault indication output is provided. This represents that an indication of a fault at the geophone has occurred. A fault indication output S6 representing an indication of a fault at the geophone 1 is provided if said fault indication is determined to occur.

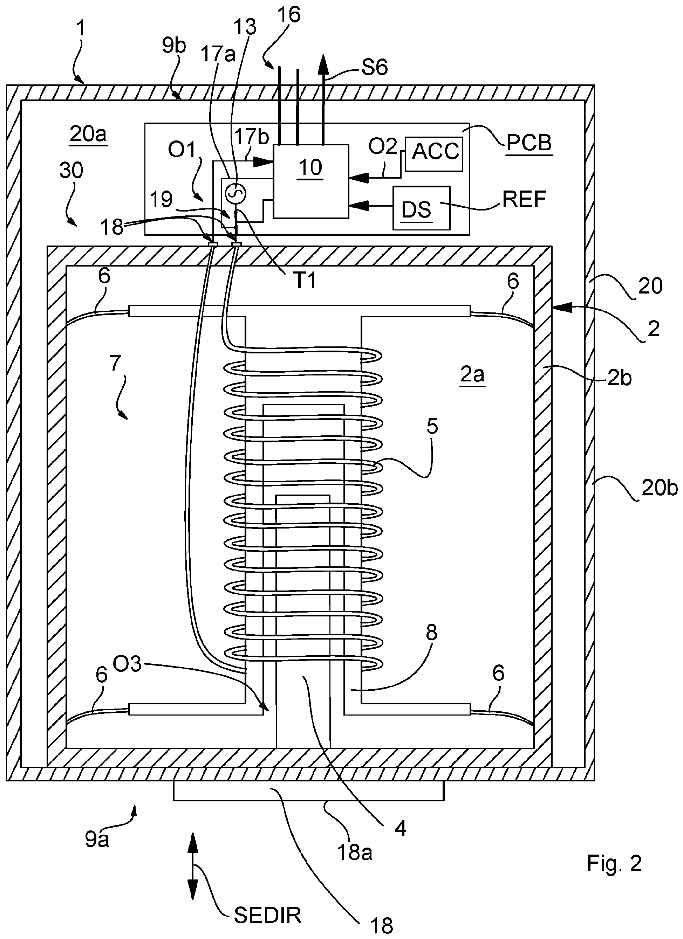

Fig. 2 illustrates schematically a geophone unit according to embodiments of the present disclosure, comprising an electric signal generator 13. The signal generator may be placed in the geophone unit 1 housing 20, or alternatively be placed externally to that housing 20.

The signal generator 13 is configured to apply an electric test signal T1 to the coil 5 of the geophone sensor arrangement 7. This provides that a first test response output O3 from the geophone sensor arrangement 7 is provided. In this embodiment, the first test response output from the geophone sensor arrangement comprises a test vibration transferred to the geophone housing due to movement of the magnet in response to the electric test signal from the signal generator 13 applied to the coil 5. Subjecting the coil terminals 18 of the coil 5 of the geophone sensor arrangement 7 to a controlled electric signal by means of an electric signal generator 13, causes the geophone housing 2b, and hence the geophone unit housing 20 to vibrate due to the geophone sensor arrangement 7 being an electromagnetic sensor arrangement. This is due to that the magnet 4 moves in response to the applied, electric test signal T1.

The first test response output O3 hence induces a test vibration at the geophone 1, such as a test vibration signal in the geophone 30 housing 2. The further sensor ACC provides the second test response output O2 in response to this test vibration signal O3 as the resulting vibrations of the geophone 30 can be detected by the further sensor ACC, e.g. as a vibration of the geophone unit 1 housing 20.

In embodiments of the present disclosure, a switching arrangement 19 may switch the test signal from the signal generator 13 to the coil 5. This may be controlled by the processing arrangement 10 or the like, and e.g. be done when desired, such as periodically and/or when other predetermined criteria are complied with.

In one or more embodiments of the present disclosure, the test signal T1 may be a predefined test signal. It may comprise a predefined electric signal T1, or a predefined signal caused by a predefined mechanical impact (as e.g. described in more details below) in order to obtain a desired wave propagation to be detected at the geophone unit 1, such as in the geophone unit housing 1 and/or vibration propagation in the ground to be transferred to the geophone unit 1 housing.

In some embodiments of the present disclosure, the electric test signal T1 may comprise a signal having a controlled frequency between 1 Hz and 200 Hz, preferably between 5 Hz and 100 Hz, such as between 10Hz and 70 Hz.

The electric test signal may have a predefined such as controlled, voltage in the range of 0V to 24V, for example between 1V and 10 V, such as around 4V.

The voltage of the electric test signal may generally be adapted to the type of geophone sensor arrangement.

In some embodiments of the present disclosure, the voltage of the electric test signal may be kept constant during substantially the entire test. In other embodiments of the present disclosure, the voltage of the electric test signal may be controlled to be regulated, e.g. to provide one or more of a sinusoidal voltage, a voltage sweep, and/or provide a plurality of different, discrete voltages. This may in some embodiments preferably be provided within one or more of the above mentioned voltage range(s).

In some embodiments of the present disclosure, the test signal T1 may comprise a predefined, static frequency and/or voltage or a predefined, varying frequency, for example a signal T1 comprising a frequency sweep or a series of predefined discrete frequencies. In some embodiments of the present disclosure, the electric test signal may comprise a square signal to obtain a step response.

In additional or alternative embodiments of the present disclosure, the coil 5 may provide a first test response O1 comprising an electric signal from the coil 5, and the reference data REF may here comprise information retrieved from the first test response O1 from the coil. It is understood that this may be an alternative to the test solution comprising use of the signal generator 13, or a further test solution that may be used in addition to the signal generator 13.

Such a solution is schematically illustrated in fig. 3, according to embodiments of the present disclosure, where the test signal T1 is provided by means of a falling weight 12 of a falling weight deflectometer 100.

The test signal T1 here comprises a vibration induced to the geophone unit housing 1 by means of a controlled, external seismic wave generator 11, in this case by means of a falling weight 12 of the falling weight deflectometer 100.In other embodiments not forming part of the present invention of the present disclosure, other types of impulse providing means may be used as the falling weight 12, such as a piston solution that may not necessarily rely on gravity. In this way, the geophone unit 1 is subjected to a test signal in the form of a deliberately, and controlled, induced vibration in the ground 15 provided by a vibration generator separate to the unit housing 20. The first test response will here normally be an electric signal from the coil 5(see O1 of figs. 1 or 2) terminals, caused by relative movement of the magnet and coil. The and the second test response signal will here be an electric signal from the further sensor ACC, i.e. the electronic accelerometer. Information retrieved from these signals may be correlated (after proper signal processing) and based thereon, it may be determined if the fault indication output should be provided or not.

In some embodiments of the present disclosure, the reference data REF may comprise predefined data, such as calibration data related to one or both of the geophone sensor arrangement and the further sensor. In some embodiments, the data processing arrangement may hereby determine deviations in behaviour from normal geophone behaviour. In some embodiments of the present disclosure, this may be obtained by usage of instance-based outlier detection methods such as k-Nearest Neighbors and/or Local Outlier Factor or explicit generalization-based methods such as an auto-encoder neural network structure.

The external seismic wave generator 11 comprises a force generating device comprising e.g. a drop weight 12 that provides an impact to the ground 15 surface in order to obtain one or more seismic waves T1 to propagate in the ground 15. This wave T1 is hence transferred therefrom to the geophone unit 1 to be detected by both the further sensor ACC and the geophone sensor arrangement 7.

The falling weight deflectometer 100 is normally used for detecting conditions at a ground surface/pavement, such as a road surface/pavement. The falling weight deflectometer 100 comprises a seismic wave generator 11 comprising the force inducing arrangement 11 comprising a drop weight 12 and a load plate 14. The load plate 14 is configured to transfer an impact force to a test surface, in this case the ground 15 surface, and the impact force is provided by means of the drop weight 12.

The force inducing arrangement 11 may in embodiments of the present disclosure comprise a lifting arrangement 23 configured to lift the drop weight 12 to a height, such as a predetermined height, above a force transmission arrangement comprising the load plate 14. The lifting arrangement may comprise an electrical or hydraulic motor, a linear actuator, a chain drive and/or the like. In embodiments of the present disclosure, said drop weight 12 may be configured to directly or indirectly impact the force transmission arrangement 14 so as to provide a force impulse to be transmitted to the load plate 14 when the drop weight 12 is released from said height, and therefrom into the ground 15 pavement.

The falling weight deflectometer 100 comprises a seismic sensor arrangement 21. The seismic sensor arrangement 21 comprises one or more geophone units 1 as e.g. previously described. Each of these geophone units 1 comprises a geophone housing 20, 2 and a geophone sensor arrangement 7 arranged in the geophone housing. The geophone sensor arrangement is configured to sense vibrations transferred from the test surface of the ground 15 and provide a first sensor output (O1) based thereon from each geophone unit 1.

The falling weight deflectometer 100 comprises a fault detection system configured to sense fault indications in the one or more geophone units. The fault detection system comprises a data processing arrangement 50, and one or more further sensors ACC comprising an electronic accelerometer configured to sense vibrations and provide a second sensor output (O2) based thereon, where the one or more further sensors ACC is/are arranged at said one or more geophone units., e.g. as previously described. The data processing arrangement 50 may comprise one or more data processing units, one or more a data storages, a stored programme code to be executed by the data processing unit(s), and a data storage 51 for collected data form the geophone. In some embodiments, the data storage for the program code may be another data storage than the data storage 51. The data processing arrangement 50 may also work as a data collection arrangement.

The data storage 51 stores valid data from the geophone sensor arrangement 7 of the respective geophone. This data may be processed at the falling weight deflectometer 100 by means of the data processing arrangement in order to determine conditions of the ground 15 pavement, or it may be transmitted to an external processing arrangement for such processing later on at another geographical location.

The data received at the data collection arrangement may comprise sensor output from the seismic sensor arrangement 21, and the received data may either comprise unprocessed or processed data such as for example digitalized sensor information provided by means of an ADC of the respective geophone unit. Alternatively, the ADC may be placed at the processing arrangement 50 external to the geophone unit. The geophone data collection arrangement 51 may be configured to receive vibration output from a plurality of discrete geophone units 1 of the falling weight deflectometer 100.

In one or more embodiments of the present disclosure the geophone unit 1 or geophone units 1 may be wired or wirelessly connected to a geophone data collection arrangement, such as comprising the data storage 51. In still further embodiments, the geophone unit(s) 1 and/or the processing arrangement 50 may comprise a data transmitter for transmitting the data from the geophone unit(s) to a cloud based data storage (not illustrated).

The geophone sensor arrangements 7 of the geophone unit(s) 1 (see fig. 1) is configured to provide a first test response O1, (see figs 1 and/or 2) when subjected to the test signal T1 that propagates in the ground 15 surface. This is may be collected at the data storage 51 in a processed or unprocessed form. The one or more further sensors ACC is/are here configured to provide a second test response O2 in response to a vibration caused by the test signal T1. As previously described, a data processing arrangement 50 is configured to process data based on at least information of the second test response output O2 and reference data REF so as to determine if a fault indication has occurred at the geophone sensor arrangement7.

The data processing arrangement 50 is configured to provide a fault indication output S6 representing an indication of a fault at one or more of the geophones if the fault indication is determined to occur.

In the embodiment of fig. 3, the processing arrangement 50 for determining if a fault indication has occurred at a geophone unit 1 is placed externally to the geophone unit(s) 1, and the processing arrangement 50 receives the information from the geophone(s) of the units 1 by means of a data communication interface 22.

It is here understood that a data processing arrangement 10 of the respective geophone unit 1 may in further embodiments of the present disclosure be configured to also or alternatively provide the fault indication output S6.

The data communication interface 22 may e.g. comprise a data communication bus such as a data bus, such as a CAN (Controller Area Network) bus. Alternatively, communication interface 22 may comprise individual data connections from each geophone unit 1 and/or the like.

The data storage 51 may comprise data from each geophone sensor arrangement 7 of the one or more geophones 1, and e.g. also comprise test data relating to the drop weight's 12 weight, drop height, pavement material, geographical location such as GSM location and/or the like that may be relevant for determining conditions of the pavement. This may be data retrieved and/or stored during normal use of the falling weight deflectometer 100.

Each geophone unit 1, if more are present, provides information of the vertical deflection response of the ground 15 surface, and this may be individually stored at data storage 51 to be retrieved for each geophone unit 1. The relation between the different data from the respective geophone 1 may thus be used for determining the propagation of the seismic waves in the ground pavement. Hence, also the location of each geophone during the test may be considered relevant data, as mixing up the geophone positions may mix up the data so that the data is processed erroneously.

The geophone units 1 are discretely arranged along a frame arrangement 16 of the falling weight deflectometer. At least one geophone unit 1 may be placed at the frame arrangement 16. However, in preferred embodiments of the present disclosure, the falling weight deflectometer 100 may comprise a plurality, such as at least 5, for example at least 10, such as at least 15 or 20 geophone units 1 may be discretely arranged at the frame arrangement 16. In some embodiments, the falling weight deflectometer may comprise between 1 and 100 geophone units 1, such as between 3 and 50, such as between 5 and 20 geophone units.

As can be seen, the falling weight deflectometer 100 may be a trailer comprising a trailer coupler 110 and a shaft 120 for carrying the trailer on wheels (wheels are though omitted from the drawing for improving the understanding of the falling weight deflectometer 100). Hence, the falling weight deflectometer 100 may be towed by a vehicle (not illustrated). In other embodiments (not illustrated) the falling weight deflectometer may be self propelling and hence comprise the necessary propulsion engine, such as a combustion engine or an electric motor for propelling the falling weight deflectometer along the ground 15 surface between different test locations where the properties of the ground pavement should be determined.

During use, the falling weight deflectometer is moved to the desired location. Then the load plate 14 is moved towards the ground by means of a displacement arrangement 40 such as comprising a linear actuator, e.g. electrically driven or driven by a combustion engine. The load palate of the force transferring arrangement is moved to support firmly on the ground 15. Then the falling weight 12 is moved to a desired height, and is then dropped to strike/impact the force transferring arrangement that transfers the impact force to the load plate 14 and therefrom to the ground surface. That induces a propagation of a wave T1 that travels along the surface of the ground 15, and the vertical deflection response of the ground surface 15 due to the impact is registered by the respective geophone unit 1 and transmitted to the processing arrangement 50.

The same may be applied during a test for testing if fault indications are present at a geophone of a geophone unit 1 as e.g. described in relation to fig. 1 and/or 2 and/or below. In some embodiments, the processing to detect if faults occur at a geophone may be provided during normal operation of the falling weight deflectometer during condition testing of the pavement, and the resulting propagating wave that is induced by the normal drop of the drop weight may here be considered a test signal. In other embodiments of the present disclosure, a specific test scenario may be applied, and the data to be used for fault test processing may not necessarily also be used for determining the conditions of the ground 15 pavement.

In still further embodiments of the present disclosure, the geophone fault testing may be provided during transport of the falling weight deflectometer, e.g. between different locations where pavement conditions are to be tested by the falling weight deflectometer. Here, vibration due to movement of the falling weight deflectometer 100 may cause vibrations in the geophone of the geophone unit (and hence may be considered a test signal T1), and hence cause sensor output from both the geophone sensor arrangement 7 and the further sensor ACC (see figs. 1 or 2), and the output (O1, O2) therefrom may be used for determining if a fault indication has occurred at the geophone unit 1.

A mechanical interface between the geophone unit 1 and the ground 15 that may be used at the falling weight deflectometer 100 may be provided by means of a geophone fixture 200 as e.g. illustrated in figs. 4a and 4b.

The geophone unit 1 may here be arranged in a geophone unit holder 210 of the geophone fixture 200, and the geophone unit holder 210 is be movably connected to a frame part 220 of the geophone fixture 200. This frame part 220 may be directly or indirectly fixated to the frame arrangement 16 of the falling weight deflectometer.

The geophone unit holder 210 can move in a movement space 250 that may e.g. be placed between opposing frame members of the frame part 220. The geophone unit holder 210 comprises a ground interfacing/ground contacting part 240 that is configured to support on the ground 15 surface and transfer the vertical deflections of the ground caused by propagating seismic wave(s) to the geophone unit holder and hence the geophone unit 1.

The geophone unit holder 210 is displaceably connected to the frame part 220 of the geophone fixture 200 by means of one or more springs 260. The geophone unit holder 210 may also be connected to the frame part 220 of the geophone fixture 200 by means of a guiding arrangement 270 that guides the vertical movement of the geophone unit holder 210 relative to the frame part 220.

Hence, when the frame arrangement 16 is moved towards the ground 15, e.g. by means of a displacement arrangement such as a frame displacement drive 130, (see fig. 3), e.g. an actuator, chain drive or the like, the geophone unit holder 210 is pushed upwards relative to the frame part 220 of the geophone fixture 200 by the ground 15 surface pushing on the ground contacting part 240. The one or more springs 260 are hence hereby stretched or compressed (dependent on the spring solution), thereby providing a counterforce towards the ground that provides a pushing force to push the geophone unit holder 210 towards the ground. This is to assure good contact with the ground 15 surface, such as the pavement surface, to improve transfer of the vertical deflections of the ground surface to the geophone unit 1.

Generally, it is understood that the falling weight deflectometer 100 in embodiments of the present disclosure may be used for non-destructive testing (NDT) of ground surfaces such as for pavement structural evaluation and/or health monitoring.

The falling weight deflectometer 100 may be used for evaluating physical properties/condition of surfaces such as ground surfaces, such as road surfaces. A road surface may comprise a pavement of e.g. highways, local roads, airport pavements, harbour areas, railway tracks and/or the like. The data acquired from the falling weight deflectometer may originate directly or indirectly from geophone(s) of the deflectometer. This data may be used for estimating pavement structural capacity.

The falling weight deflectometer 100 may in embodiments of the present disclosure comprise a monitoring screen 52 providing a user interface for use by human user during usage of the falling weight deflectometer 100.

A fault indication output S6 representing an indication of a fault at the geophone of the falling weight deflectometer may be presented at this screen e.g. by a warning message, colour indication, and/or the like, for example as an alarm message.

In one or more embodiments of the present disclosure, a control system of the falling weight deflectometer may prevent further use of the falling weight deflectometer if the fault indication output is provided, before one or more predefined conditions/criteria is/are complied with. This predefined condition/criteria may e.g. comprise one or more of:
- that the geophone is replaced, and the fault indication output preferably no longer occurs
- that the geophone is repaired so that the fault signal no longer occurs
- that the geophone is taken out of service so that a reduced number of geophones are used
- that a user confirms the error so as to indicate that the user is aware of the fault signal.

In some embodiments of the present disclosure, in case the fault indication signal occurs, further "normal use" of the deflectometer may be prevented, so that a user may not use the deflectometer as it is intended for until the fault indication is handled. For example:
- a drop weight may be prevented from dropping or being lifted,
- data, such as sensor data, obtained during fault indications may be tagged (to enable easy identification of potentially corrupted sensor data) and/or deleted and/or not stored,
- one or more features of a user interface at a screen of the deflectometer may be locked/disabled, for example access/control of certain, predefined functionalities/features of the user interface and/or deflectometer may be locked, disabled and/or prevented,
and/or the like until the predefined condition/criteria is complied with. In other or additional embodiments, the deflectometer may still be used, but a warning may be set to occur so that a user can know that one or more geophones may be or onn become, faulty.

Fig. 5 illustrates a flow chart according to embodiments of the present disclosure. In the first step S51 (Init. FTe), A geophone fault test is initiated. This may be provided by a human user activating the test, or may be provided automatically by a control unit when predefined criteria are complied with, for example at a timer runout, that a frame unit 16 have been lowered or a load plate 14 have been lowered to support on the ground, or other predefined criteria. In further embodiments, the fault initiation S51 may merely be considered to be provided automatically when a vibration has been registered.

The test signal T1 is provided at step 52 (App T1). For example, the test signal T1 may comprise the electronic test signal from a signal generator 13 applied to the coil terminals as previously described in relation to fig. 2.

For example, the test signal T1 may have a fixed frequency, a varying frequency, such as a frequency sweep, or may comprise a plurality of signals at predefined, discrete frequencies. This causes the magnet 4 of the geophone sensor arrangement 7 to move, such as vibrate, and this is considered the test response of the geophone sensor arrangement 7, i.e. a test vibration signal O3 in the geophone 2 housing that is transferred to the geophone unit housing 20.

The further sensor ACC hence provides a second test response output O2 in response to the test vibration signal from the geophone sensor arrangement 7, This may be transferred to the sensor through the geophone unit 1 housing 20.

At step S53 (Rec. O2), the test response output O2 from the further sensor ACC is recorded, such as stored in a data storage DS, 51.

A processing arrangement 10, 50 processes information of the test response output O2 from the further sensor ACC together with reference data REF at step S54 (Pr. Sens. INF & REF) to determine if a fault indication has occurred.

It is to be understood that the detection of fault indications may be provided in various ways. The processing at step S54 may comprise a correlation analysis, such as cross-correlation realised through utilization of Fast Fourier Transform (FFT) and inverse FFT between the test response output O2 and a signal in the reference data REF. Other, further or alternative, processing techniques may comprise outlier analysis on information of the second test response O2 or information of a processed version of the second test response. This may comprise usage of techniques such as one or more of extreme value analysis, instance-based techniques similar to k-Nearest Neighbour and Local Outlier Factor, and/or explicit generalization-based methods such as the auto-encoder neural network structure. Said processing of the second test response O2 can, e.g., in one embodiment be the numerically integrated signal realised through usage of methods such as for example, but not limited to, Trapezoidal- and Simpson integration.

The processing to detect/identify fault indications may in embodiments of the present disclosure comprise one or more of correlation and/or filtering. Additionally, or alternatively, it may comprise comparison/calculation by means of machine learning models where the machine learning models have been trained to detect specific faults/fault indications, or learned to model a normal behaviour of the geophone sensor arrangement to identify results differing therefrom.

The reference data REF may in embodiments of the present disclosure comprise/ represent reference data of a functional geophone and/or the reference data REF may comprise calibration information. The reference data may comprise a representation of a signal that was sampled during a known impact (for one or both sensor arrangements). In additional or alternative embodiments, the reference data may comprise a frequency response representation that may e.g. have been obtained by means of FFT, it may comprise one or more auto encoder models and/or the like.

In some embodiments of the present disclosure, the reference data REF may comprise results from an experiment performed during routine calibrations that may provide information for use as a baseline for the normal behaviour of the geophone. Said results may comprise raw or processed samples from the geophone and/or accelerometer obtained during excitation of a test vibrational signal on the terminals of the geophone sensor. In additional or alternative embodiments, the results may comprise parameters of a fault detection model such as the weight parameters of a neural network, and/or thresholds determined from the calibration process. The reference data REF may for example comprises weight parameters of a neural network the reference data may comprise coefficients of a mathematical model such as a dynamical model or local outlier factor model.

In some embodiments of the present disclosure, information of a plurality of said test signals may be used so as to establish and/or update the reference data REF, for example as a mathematical model. In some embodiments of the present disclosure, information of a plurality of said test responses O1, O2, O3 may be used so as to establish and/or update said reference data REF, for example as a mathematical model. For example, information of a plurality of the test response signals collected from the accelerometer ACC based on different test signals provided at different points in time may be used so as to establish and/or update said reference data REF. As another example, information of a plurality of the test response signals collected from the geophone sensor based on different test signals (provided e.g. by a deflectometer or the like) provided at different points in time may be used so as to establish and/or update said reference data REF.

In some embodiments of the present disclosure, the reference data REF may comprise a model of the geophone arrangement, and information from the output from the further sensor may be compare, such as correlated, with output from the model. For example, a simulation may be provided by means of the model with a test input similar to, or having features common with, the test signal T1, e.g. also including the latest calibration information, and the output of the simulation may be correlated or compared with the information of the test response output O2 of the further sensor ACC. This may enable detection of a fault indication, for example in case the information from the test response output O2 of the further sensor deviates with an amount, such as exceeds a threshold, determined by means of the simulation model or statistical adaptive thresholds methods such as Median Absolute Deviation, Quantile-based thresholds, and iterative thresholding methods.

If a fault indication is determined to occur based on the processing by means of the processing arrangement(s) 10, 50, the fault indication output is provided in step S6.

A fault indication output is be provided at Step S6 (Indic. F) if (see test TE51 - Fault det.?) a fault indication is determined to occur based on the processing of step S54.

In one or more embodiments of the present disclosure, a fault indication output may be provided (Step S6) if a threshold value, such as an upper and/or lower threshold value, is exceeded. This may for example be provided through means of extreme-value analysis of outlier scores, for example realized through comparing if a value exceeds an upper threshold or goes below a lower threshold. Besides or as an alternative to outlier scores, the analysis may also be performed on other metrics describing a deviation from the normal behaviour.

This threshold value may be determined based on the processing of the output from one or more of the sensors 7, ACC and/or may comprise a, so to say, predefined threshold. The predefined threshold ay e.g. be a value, a trend, look up table or the like used for several geophones of the same geophone type, or be defined by means of a calibration step at the geophone unit 1 while it was functional.

In other or additional embodiments, the threshold(s) can also be determined/defined by a model that adapts to each geophone and extract appropriate thresholds based on its normal behaviour. This may e.g. be provided a single time, at discrete periods in time, or substantially continuously or over timer.

If the processing provided at step S54 resulted in that no fault indications are registered, the test TE51 provides that the geophone is considered OK (StepS55).

Fig. 6 illustrates a flow chart according to further embodiments of the present disclosure. Here, a test signal provided at the geophone unit 1 may comprise a vibration induced to the geophone unit housing 20 by means of an external seismic wave generator, for example a controlled seismic wave generator. In the present disclosure, the external seismic wave generator may comprise the drop weight of a falling weight deflectometer.

At step S61 (Init. FTe), the test is initiated, see e.g. also description relating to step S51 of fig. 5.

At step S62 (Dr We.), the drop weight is released and provides an impact force that results in a propagation of a wave in the ground. This wave is sensed by both the geophone sensor arrangement at the respective geophone unit 1 that provides the first test response O1, and the further sensor ACC at the respective geophone unit 1 that provides the second test response O2.

Information of these output O1, O2 is thus processed Step S64 (Proc. sens. dat) in order to determine if a fault indication has occurred. It is generally to be understood that this may comprise one or more of the processing methods, techniques or the like as described above, for example in relation to step S54 of fig. 5.

In one or more embodiments of the present disclosure, information from the sensor 7, ACC data may be transformed into a common domain, either that of the output from the geophone sensor arrangement 7 or that of the output of the further sensor ACC. These sensors 7, ACC may provide the output in different domains. When output from sensors 7, ACC are transformed into a common domain, the correlation can be computed as an indication of similarity between the sensors. Since there may be a temporal misalignment between the signals which in some embodiments of the present disclosure may make it relevant to use cross-correlation analysis.

In one or more embodiments of the present disclosure, information of the first test response O1 may be integrated or differentiated by a data processor, and the result/results of said transformation may be used for computing correlation with the reference data or the result/results may be considered as part of the reference data REF and used for comparison with the second test response O2. This may e.g. be relevant if an external vibration is induced to the geophone 30, for example by means of a falling weight deflectometer.

The geophone sensor arrangement may provide sensor output representing a velocity, an acceleration or a so to say differentiated acceleration dependent on use, of an internal mass of the geophone 30, for example the magnet 4. By transforming the measurements using, e.g., integration, differentiation, or other methods, the result may be used in a correlation analysis, such as cross correlation, with the sensor data from the further sensor ACC, as this data from the further sensor comprise acceleration information of the geophone housing.

Naturally, the opposite may also occur in other embodiments of the present disclosure, Here, the sensor information obtained from the further sensor ACC may be differentiated or integrated, and the resulting information may be used for correlation analysis, such as cross correlation with information from the first test response.

The transformation into a common domain may e.g. be provided prior to the processing to detect if fault indications has/have occurred.

If a fault indication is determined to occur (Test TE 61) based on the processing at step S64, a fault indication output is provided at step S66 (Indic. F). If no fault indication is determined to occur (Test TE 61) based on the processing at step S64, the geophone sensor is considered functional, and no fault indication output is provided.

It is generally to be understood that the fault indication output S56, S6, S66 as described above in relation to various embodiments of the present disclosure may in some embodiments of the present disclosure comprise an audio signal and/or a visual indication. An audio signal may be provided by means of an acoustic signal generator at the geophone or external to the geophone. A visual indication may comprise a warning light, such as by means of a light emitting device, such as a Light Emitting Diode or another light source type at the geophone or at an external device, for example somewhere at a falling weight deflectometer if the geophone unit 1 is installed at a falling weight deflectometer.

The visual indication may additionally or alternatively be provided at a monitoring screen view of a monitoring system configured to monitor the condition of one or more geophones 1. This geophone monitoring system may e.g. comprise a monitoring system of a falling weight deflectometer, for example integrated in a user interface presented on a monitoring screen 52, see fig. 3.

In some embodiments of the present disclosure, the geophone monitoring system may additionally or alternatively be a dedicated, stand-alone geophone monitoring system that may receive fault indications S6 from different geophone units 1 arranged at substantially the same geographical locations or different geographical locations, e.g. over a wireless telecommunication network, e.g. 4G, 5G over a satellite data communication network and/or the like.

Fig. 7 illustrates two test responses 71, 72 based on output from sensors ACC, 7 of a geophone unit 1 according to embodiments of the present disclosure. These have been provided by means of a test arrangement. The geophone unit 1 is attached/connected to a part to be vibrated by providing an impulse by means of an impulse giver that provides a mechanical impulse to the part, and the part is allowed to vibrate in response to the provided impulse. This should simulate an impulse providing a seismic wave in a ground to be sensed.

The output from the further sensor, i.e. the electronic accelerometer ACC is depicted by the dashed graph 71, and the output from the geophone sensor 7 is depicted by the solid graph 72. The output from the sensors 7, ACC have been processed to obtain the illustrated graphs 71, 72, for example by using a Butterworth high-pass filter for removing low frequency noise. Also, a transfer function of the sensor domain to obtain a representation of deflection to enable comparison.

The x-axis is a sample index of 8000 kHz, and the depicted part of the graphs is within about 0.5 seconds. The y-axis illustrates displacement in meters [m], it is noted that it is illustrated in a scale of 10⁻⁵ meter.

As can be seen, the sensors 7, ACC senses substantially the same impulse response, and this indicates that the solution may work in practice at a geophone unit housing 1 for providing data enabling indication of fault indications at the geophone unit.

As an example, the data providing the graphs 71 and/or 72 may be stored as a calibration data, and if a later, similar test is provided, and the graphs are displaced in time, amplitude, or in other ways deviates from each other above or below a certain threshold, the fault indication output may be provided. This is naturally also the case if one of the sensor outputs O1, O2 are missing or are substantially constant while the other sensor provides an output in response to the impulse. Hence, in some situations, it may not be necessary to determine if it is the geophone sensor arrangement 7 or the accelerometer ACC, or electric circuitry or mechanical fastenings relating to one of these, which fails. It may still provide the fault indication output as long as deviations/anormalities from e.g. calibration data and/or between sensor information is detected as present by means of the processing.

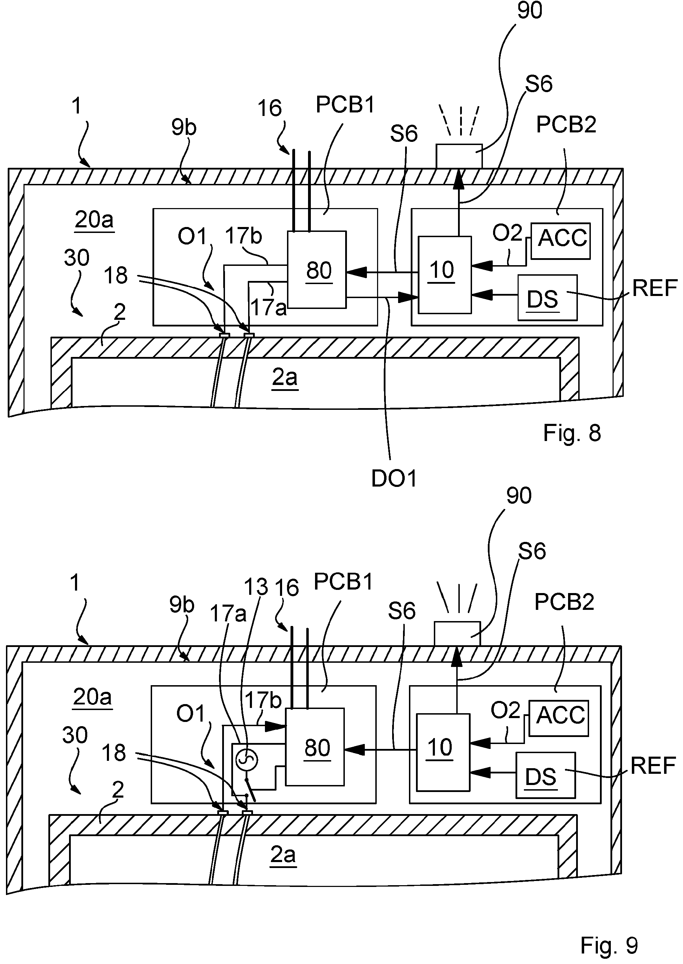

Fig. 8 illustrates schematically a part of a geophone unit 1 according to embodiments of the present disclosure. The geophone unit 1 may here be substantially as the one illustrated in fig. 1. However, here, two Printed Circuit Boards PCB are provided, i.e. a first PCB, PCB1 and a second PCB, PCB2. The first PCB may comprise a processing arrangement 80 that may comprise a micro processor, an ADC and/or the like for handing and possibly digitalizing the output O1 from the geophone sensor arrangement 7 (see fig. 1). The processing arrangement 80 of the first PCB1 may also handle transmittance of the data from the geophone sensor 7, to be collected at an external data collection arrangement.

The second PCB2 comprises the further sensor ACC, a processing arrangement 10 as previously described, and possibly also a data storage DS, for example comprising reference data REF and program code to be executed by the processing unit of the processing arrangement 10. This enables processing data from the outputs O1, O2 of the sensors 7, ACC so as to determine if a fault indication has occurred at the geophone unit, such as at the geophone sensor arrangement 7.

The processing arrangement 80 may in embodiments of the present disclosure provide/transmit data from the output O1 of the coil to the processing arrangement 10, this may e.g. comprise digitalized data DO1 of the output O1.

Fig. 8 moreover illustrates a further embodiment of the present disclosure, where the geophone unit comprises a light emitter 90. If the processing arrangement 10 determines that a fault indication occurs, a fault indication output S6 is provided. In this case, a first output S6 is provided to light emitter 90 such as an LED at the geophone unit. If no fault is detected, the light emitter may be turned off, provide white light, green light or the like that may indicate that the geophone unit is functional. If the fault is detected, the output S6 makes the light emitter provide light in another colour, such as for example red or yellow, indicating a fault at the geophone unit. This can be seen from the exterior of the Geophone. It is understood that in other embodiments of the present disclosure, the light emitter 90 maybe omitted.

Additionally, or alternatively an output S6 from the processing arrangement 10 indicating a fault may also or alternatively, in embodiments of the present disclosure, be transmitted to transmitting circuity, such as the processing arrangement 80, so that this information can be transmitted from the geophone unit 1 to e.g. an external monitoring system.

In other embodiments, the processing arrangement(s) 10, 80, further sensor ACC, data storage DS and/or the like may be placed on a common PCB, e.g. as illustrated in fig. 1 and/or 2.

Fig. 9 illustrates embodiments of the present disclosure where two PCBs PCB1, PCB2 are again provided in the geophone. Here, however, the processing arrangement 10 that processes data to find indications of faults may not need the output from the geophone sensor arrangement when this sensor arrangement 7 is subjected to a vibration, as the signal generator 13 provides the test signal T1 (when the switching arrangement 19 is in a closed position, thereby causing a vibration of the geophone unit 1 housing 20 that also makes the PCB2 vibrate, and this causes the accelerometer ACC to sense the vibrations and provide output O2.

In still further embodiments, however, different fault indication processing routines may be provided by the same or different processing arrangements 10, 50 (see also fig. 3). Some of these may include/utilize data/information O1, O2 from both sensors 7, ACC, and reference data REF while others may be using only the data from the output O2 and reference data REF.

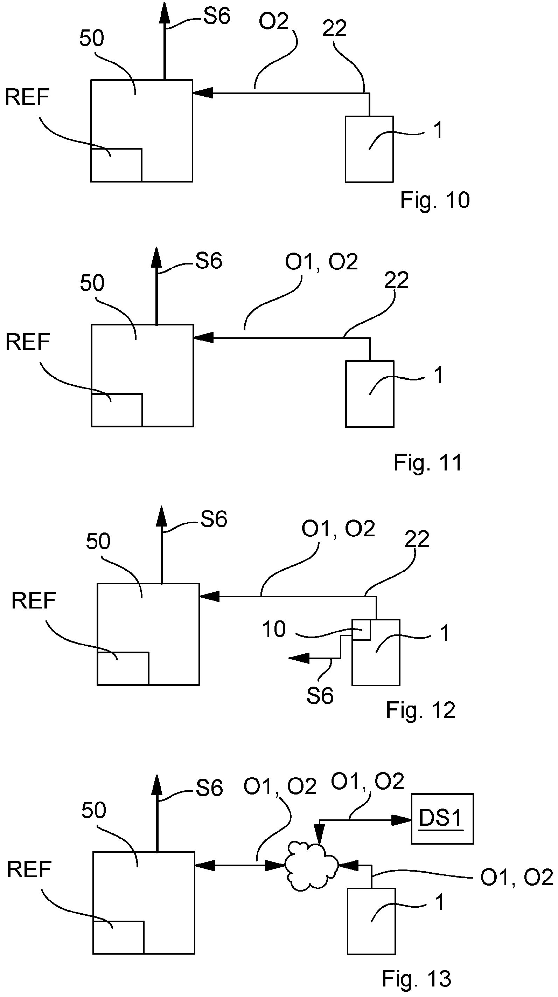

Fig. 10 illustrates schematically an embodiment of the present disclosure where a processing arrangement 50 external to the geophone unit provides the processing of data so as to determine if a fault indication has occurred at the geophone unit 1. The processing arrangement 50 in the embodiment of fig. 10 receives and processes data/information from the sensor output O2 of the further sensor ACC (see previous description) together with the reference data REF and provides a fault indication output S6 if a fault indication is determined to occur.

Fig. 11 illustrates schematically a further embodiment of the present disclosure where a processing arrangement 50 external to the geophone unit 1 provides the processing of data so as to determine if a fault indication has occurred at the geophone unit 1. The processing arrangement 50 here, in the embodiment of fig. 11, receives and processes data/information from the sensor output O2 of the further sensor ACC (see previous description) and the data/information from the output O1 of the geophone, such as digitalized data of the output O1. The reference data REF is also used in this processing, e.g. stored in a data storage. The processing arrangement 50 provides the fault indication output S6 if a fault indication is determined to occur.

Fig. 12 illustrates schematically a still further embodiment of the present disclosure where distributed processing to determine if fault indication(s) occur at the geophone unit 1. A processing arrangement 50 external to the geophone unit 1 provides first processing of data so as to determine if a fault indication has occurred at the geophone unit 1. The processing arrangement 50 here, in the embodiment of fig. 11, may receive and processes data/information from the sensor output O2 of the further sensor ACC (see previous description) and/or the data/information from the output O1 of the geophone, such as digitalized data of the output O1. The reference data REF is also used in this processing, e.g. stored in a data storage. The processing arrangement 50 provides the fault indication output S6 if a fault indication is determined to occur. This processing provided by the external processing arrangement may be more hardware demanding processing such as comprising comparison/calculation by means of machine learning models where the machine learning models have been trained to detect specific faults/fault indications, and/or learned to model a normal behaviour of the geophone sensor arrangement 7 of the geophone unit 1 to identify results differing therefrom. The external processing arrangement 50 here provides a fault indication output S6 if a fault indication is determined to occur.

An internal processing arrangement 10 placed at the geophone unit 1 may provide another processing of data so as to determine if a fault indication has occurred at the geophone unit 1. This processing may be less demanding and demand less computing power. For example, it may comprise correlation of information/data retrieved from the output O1, O2 of one or both sensors ACC, 7 of the geophone unit, e.g. as described preciously. The internal processing arrangement 10 may here provide another a fault indication output S6 that is separate to the fault indication output of the external processing arrangement 50 is determined to occur.

Fig. 13 illustrates schematically an embodiment of the present disclosure where processing to determine if fault indication(s) occur at the geophone unit 1 is provided at a processing unit 50 external to the geophone unit, and where data is sent to a cloud based data storage DS1, such as a server. A processing arrangement 50 external to the geophone unit 1 retrieves data from this data storage DS1 and provides a processing of this data based on reference data so as to determine if a fault indication has occurred at the geophone unit 1. The processing arrangement 50 here, in the embodiment of fig. 11, may receive and processes data/information from the sensor output O2 of the further sensor ACC (see previous description) and/or the data/information from the output O1 of the geophone from the cloud based data storage, such as digitalized data of the output O1. The reference data REF is also used in this processing, e.g. stored in a data storage DS, e.g. separate to the cloud based data storage. The processing arrangement 50 provides the fault indication output S6 if a fault indication is determined to occur.

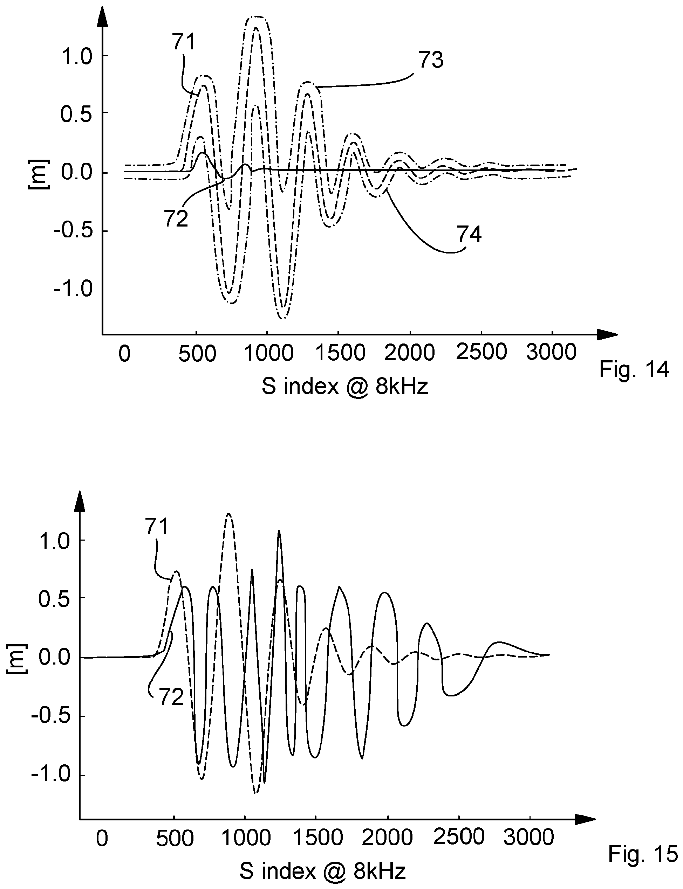

Fig. 14 illustrates schematically a simplified test response according to embodiments of the present disclosure, where a fault indication is determined to occur, and hence a fault indication output may be provided. This is based on the same scale, sampling index etc. as illustrated in fig, 7. The dashed graph 71 represents the output from the further sensor ACC, and the solid graph 72 represents the output from the geophone sensor 7. The embodiment is merely to illustrate the principle of thresholds and an example of a faulty geophone unit, and the solid graph 72 is merely an envisaged example.

A functional geophone 30 /sensor arrangement 7 should preferably provide substantially the same output as the further sensor ACC (after an initial sensor data processing), for example with regards to where peaks are placed along the X axis, and with regards to amplitude and/or the like.

For example, based on the graph of fig. 7, representing output from a functional geophone unit 1, thresholds 73, 74 (dash-dotted lines), such as predefined thresholds, may be provided which together establish an upper bound and lower bound for an allowed area that the signals 71, 72 may be within (or the signal may be compared by using extreme value analysis on the difference in signal values). As can be seen on the solid graph 72 it is outside the allowed area at several samples, which indicates that there may be some fault present in the geophone 30 such as its sensor arrangement 7, or possibly an electronic circuitry or mechanical coupling between the geophone 30 and the geophone unit housing 1. Hence, the processing arrangement 10, 50 discovers this and provides a fault indication output S6, S56, S66 accordingly. The graph 71 and/or the thresholds 73, 74 may here be considered the previously mentioned reference data REF.

Fig. 15 illustrates schematically a further, simplified test response according to embodiments of the present disclosure, where a fault indication is determined to occur, and hence a fault indication output may be provided. This is based on the same scale, sampling index etc. as illustrated in fig, 7. The dashed graph 71 represents the output from the further sensor ACC, and the solid graph 72 illustrates represents the output from the geophone sensor 7. The embodiment is merely to illustrate the principle of a faulty geophone unit, such as a faulty geophone sensor arrangement 7, and the solid graph 72 is merely an envisaged example.

The accelerometer output graph 71 illustrates an indication of the "correct"/expected output from the geophone sensor arrangement 7. However, the actual geophone sensor arrangement output 72 is clearly corrupted, and thus, the processing arrangement 10, 50 discovers this and provides a fault indication output S6, S56, S66 accordingly. This error indication may be identified by means of e.g. correlation analysis, and deviation metrics such as RMSE (Root Mean Square Error), on the signals where the lag is removed, finally, a thresholding technique can be applied on the RMSE. Alternatively, or additionally a deviation metric can be defined at each sample and a thresholding technique can be applied to the series of deviation values.

The graph 71 and/or other data, such as thresholds (not illustrated in fig. 15) may here be considered the previously mentioned reference data REF.

Above, the geophone unit 1 is described as a unit with processing arrangement 10, accelerometer and/or the like placed inside the unit housing 20, together with a geophone sensor arrangement 7 in a separate housing 2. It is however understood that in further embodiments of the present disclosure, the geophone unit 1 may be provided by a geophone housing 1, and hence, the processing arrangement 10, accelerometer ACC and other circuitry may be arranged internally in the geophone 30 housing interior 2b itself together with the geophone sensor arrangement.

The further sensor ACC is in the above described as being placed at a Printed Circuit Board, PCB, PCB2. However, in further embodiments of the present disclosure, the further sensor ACC may be a unit separate to a PCB, e.g. integrated in a stand alone device that may be attached to e.g. the wall 20b of the geophone unit 1 housing 20, attached to the wall 2b of the geophone 30 housing 2, or attached at another relevant location.

An example of a use of a geophone unit 1 according to various embodiments of the present disclosure is described above in relation to a use at a falling weight deflectometer. It is however understood that in other embodiments of the present disclosure, the geophone unit 1 may be used e.g. for detecting and quantifying earthquakes, be used in the mining industry and/or the like. For example, it may be used in reflection seismology to estimate properties of a earth/ground subsurface from reflected seismic waves and/or the like.

In general, it is to be understood that the present disclosure is not limited to the particular examples described above but may be adapted in a multitude of varieties. The scope of the invention is defined by the appended claims.

## Claims

1. A deflectometer (100), such as a falling weight deflectometer, for detecting conditions at a test surface, such as a pavement surface, for example a road surface, wherein the deflectometer (100) comprises:
- a force inducing arrangement (11) comprising a drop weight (12) and a load plate (14), wherein the load plate (14) configured to transfer an impact force to the test surface, and wherein the impact force is provided by means of the drop weight (12), and
- a seismic sensor arrangement (21) comprising one or more geophone units (1), where each of said one or more geophone units (1) comprises a housing (2, 20) and a geophone sensor arrangement (7) arranged in the housing (2, 20), wherein the geophone sensor arrangement (7) is configured to sense vibrations transferred from said test surface and provide a first sensor output (O1) based thereon, wherein the geophone sensor arrangement (7) comprises a coil (5) and a magnet (4) configured to move relative to each other when the geophone (1) is subjected to said vibrations so as to provide said first sensor output (O1),
wherein the deflectometer (100) comprises a fault detection system configured to detect fault conditions in said one or more geophones (1), wherein said fault detection system (10, ACC) comprises:
- a data processing arrangement (10, 50), and
- one or more further sensors (ACC) comprising an electronic accelerometer configured to sense vibrations and provide a second sensor output (O2) based thereon, where said one or more further sensors (ACC) is/are arranged at said one or more geophone units (1),
wherein the geophone sensor arrangement (7) is configured to provide a first test response (O1, O3) when subjected to a test signal (T1), and wherein the one or more further sensors (ACC) is/are configured to provide a second test response (O2) in response to a vibration caused by the test signal (T1),
wherein the data processing arrangement (10, 50) is configured to process data based on at least information of the second test response (O2) and reference data (REF) so as to determine if a fault indication has occurred at one of said one or more geophone units (1), and
wherein the data processing arrangement (10 50) is configured to provide a fault indication output (S6, S56, S66) representing an indication of a fault at a geophone unit (1) if said fault indication is determined to occur.

2. The deflectometer (100) according to claim 1, wherein the data processing arrangement (10) comprising one or more data processing units.

3. The deflectometer (100) according to any preceding claim, wherein a geophone housing (2) of a geophone (30) is arranged inside a geophone unit housing (20), and wherein said data processing arrangement (10) is arranged in the geophone unit housing (20) external to the geophone housing (20).

4. The deflectometer (100) according to any preceding claim, wherein a geophone housing (2) of a geophone (30) is arranged inside a geophone unit housing (20), and wherein said further sensor is arranged in the geophone unit (1) housing (20), such as inside an interior unit housing cavity (20a), and external to the geophone (30) housing (2).

5. The deflectometer (100) according to any preceding claim, wherein a control system of the falling weight deflectometer is configured to prevent further use of the falling weight deflectometer if the fault indication output (S6, S65, S66) is provided, before a predefined condition is complied with.

6. The deflectometer (100) according to any preceding claim, wherein the first test response (O1) comprises an electric signal from the coil (5), and wherein the reference data (REF) comprises information retrieved from the first test response.

7. The deflectometer (100) according to any preceding claim, wherein said test signal (T1) comprises a vibration induced to a housing (2, 20) of the geophone unit (1) by means of a vibration generator (11), such as a controlled, external seismic wave generator (11), preferably by means of a falling weight (12) of a falling weight deflectometer.

8. The deflectometer (100) according to any preceding claim, wherein the test signal (T1) comprises an electric test signal applied to the coil (5) of the geophone sensor arrangement (7) by means of an electric signal generator (13), and wherein said first test response (O3) comprises a test vibration transferred to the geophone housing (2) due to movement of the magnet (4) in response to said electric test signal applied to the coil (5).

9. The deflectometer (100) according to claim 8, wherein the electric signal generator (13) comprises a signal generator in the geophone unit (1), such as located inside a housing (20) of the geophone unit (1).

10. The deflectometer (100) according to any of the claims 8-9, wherein the electric test signal (T1) comprises a signal having a frequency, such as a controlled frequency, between 1 Hz and 200 Hz, preferably between 5 Hz and 100 Hz, such as between 10Hz and 70 Hz.

11. The deflectometer (100) according to any preceding claim, wherein the first test response (O3) induces a test vibration at the geophone (1), such as a test vibration signal in the geophone housing (2, 20), and wherein the further sensor (ACC) provides the second test response (O2) in response to the test vibration signal.

12. The deflectometer (100) according to any preceding claim, wherein the reference data (REF) represents reference data of a functional geophone and/or wherein the reference data comprises calibration information.

13. The deflectometer (100) according to any preceding claim, wherein the reference data (REF) comprises weight parameters of a neural network and/or wherein the reference data (REF) comprises coefficients of a mathematical model.

14. The deflectometer (100) according to any preceding claim, wherein information of a plurality of said test signals (T1) and/or information of a plurality of said test responses (O1, O2, O3) are used so as to establish and/or update said reference data (REF) as a mathematical model.

15. The deflectometer (100) according to any preceding claim, wherein said processing based on at least reference data (REF) and information retrieved from the second test response (O2) comprises a correlation information, such as a cross-correlation, of information retrieved from the second test response (O2) and information of the reference data (REF).

16. The deflectometer (100) according to any preceding claim, wherein the geophone sensor arrangement (7) is configured to sense vibrations in a first sensing direction (SEDIR), and wherein the further sensor (ACC) is configured to at least sense vibrations in the same, first sensing direction (SEDIR).

17. A method of detecting conditions at a test surface, such as a pavement surface, for example a road surface using a deflectometer (100), such as a falling weight deflectometer, wherein the deflectometer (100) comprises:
- a force inducing arrangement (11) comprising a drop weight (12) and a load plate (14), wherein the load plate (14) configured to transfer an impact force to the test surface, and wherein the impact force is provided by means of the drop weight (12), and
- a seismic sensor arrangement (21) comprising one or more geophone units (1), where each of said one or more geophone units (1) comprises a housing (2, 20) and a geophone sensor arrangement (7) arranged in the housing (2, 20), wherein the geophone sensor arrangement (7) is configured to sense vibrations transferred from said test surface and provide a first sensor output (O1) based thereon, wherein the geophone sensor arrangement (7) comprises a coil (5) and a magnet (4) configured to move relative to each other when the geophone (1) is subjected to said vibrations so as to provide said first sensor output (O1),
wherein the deflectometer (100) comprises a fault detection system configured to detect fault conditions in said one or more geophones (1), wherein said fault detection system (10, ACC) comprises:
- a data processing arrangement (10, 50), and
- one or more further sensors (ACC) comprising an electronic accelerometer configured to sense vibrations and provide a second sensor output (O2) based thereon, where said one or more further sensors (ACC) is/are arranged at said one or more geophone units (1),
wherein the method comprises the steps of:
providing a test signal (T1) so as to induce the geophone sensor arrangement (7) to provide a first test response (01, 03) from the geophone sensor arrangement (7),
providing a second test response (O2) from the further sensor (ACC) in response to a vibration caused by the test signal (T1),
processing data so as to determine if a fault indication has occurred at the geophone unit (1), wherein said processed data is based on at least reference data (REF) and information retrieved from the second test response (O2), and
providing a fault indication output (S6, S56, S66) representing an indication of a fault at the geophone unit (1) if said fault indication is determined to occur.

## Patentansprüche

1. Deflektometer (100), wie etwa ein Fallgewichtsdeflektometer, zum Erfassen von Zuständen an einer Prüffläche, wie etwa einer Fahrbahnoberfläche, beispielsweise einer Straßenoberfläche, wobei der Deflektometer (100) umfasst:
- eine Krafterzeugungsanordnung (11), umfassend ein Fallgewicht (12) und eine Lastplatte (14), wobei die Lastplatte (14) zum Übertragen einer Aufprallkraft auf die Prüffläche konfiguriert ist, und wobei die Aufprallkraft mittels des Fallgewichts (12) bereitgestellt wird, und
- eine seismische Sensoranordnung (21), umfassend eine oder mehrere Geophoneinheiten (1), wobei jede der einen oder mehreren Geophoneinheiten (1) ein Gehäuse (2, 20) und eine in dem Gehäuse (2, 20) angeordnete Geophonsensoranordnung (7) umfasst, wobei die Geophonsensoranordnung (7) dazu konfiguriert ist, von der Prüffläche übertragene Schwingungen zu erfassen und darauf basierend einen ersten Sensorausgang (O1) bereitzustellen, wobei die Geophonsensoranordnung (7) eine Spule (5) und einen Magneten (4) umfasst, die dazu konfiguriert sind, sich relativ zueinander zu bewegen, wenn das Geophon (1) den Schwingungen ausgesetzt wird, um den ersten Sensorausgang (O1) bereitzustellen,
wobei der Deflektometer (100) ein Fehlererkennungssystem umfasst, das dazu konfiguriert ist, Fehlerzustände in dem einen oder den mehreren Geophonen (1) zu erkennen, wobei das Fehlererkennungssystem (10, ACC) umfasst:
- eine Datenverarbeitungsanordnung (10, 50), und
- einen oder mehrere weitere Sensoren (ACC), umfassend einen elektronischen Beschleunigungsmesser, der dazu konfiguriert ist, Schwingungen zu erfassen und darauf basierend einen zweiten Sensorausgang (O2) bereitzustellen, wobei der eine oder die mehreren weiteren Sensoren (ACC) an der einen oder den mehreren Geophoneinheiten (1) angeordnet ist/sind,
wobei die Geophonsensoranordnung (7) dazu konfiguriert ist, eine erste Testantwort (O1, O3) bereitzustellen, wenn sie einem Testsignal (T1) ausgesetzt wird, und wobei der eine oder die mehreren weiteren Sensoren (ACC) dazu konfiguriert ist/sind, als Reaktion auf eine durch das Testsignal (T1) verursachte Schwingung eine zweite Testantwort (O2) bereitzustellen,
wobei die Datenverarbeitungsanordnung (10, 50) dazu konfiguriert ist, Daten zumindest basierend auf Informationen der zweiten Testantwort (O2) und Referenzdaten (REF) zu verarbeiten, um zu bestimmen, ob an einer der einen oder mehreren Geophoneinheiten (1) eine Fehleranzeige aufgetreten ist, und
wobei die Datenverarbeitungsanordnung (10 50) dazu konfiguriert ist, einen Fehleranzeigeausgang (S6, S56, S66) bereitzustellen, der eine Anzeige eines Fehlers an einer Geophoneinheit (1) darstellt, wenn bestimmt wird, dass die Fehleranzeige auftritt.

2. Deflektometer (100) nach Anspruch 1, wobei die Datenverarbeitungsanordnung (10) eine oder mehrere Datenverarbeitungseinheiten umfassend.

3. Deflektometer (100) nach einem der vorhergehenden Ansprüche, wobei ein Geophongehäuse (2) eines Geophons (30) innerhalb eines Geophoneinheitsgehäuses (20) angeordnet ist, und wobei die Datenverarbeitungsanordnung (10) in dem Geophoneinheitsgehäuse (20) außerhalb des Geophongehäuses (20) angeordnet ist.

4. Deflektometer (100) nach einem der vorhergehenden Ansprüche, wobei ein Geophongehäuse (2) eines Geophons (30) innerhalb eines Geophoneinheitsgehäuses (20) angeordnet ist, und wobei der weitere Sensor in dem Gehäuse (20) der Geophoneinheit (1), wie etwa innerhalb eines inneren Einheitsgehäusehohlraums (20a), und außerhalb des Gehäuses (2) des Geophons (30) angeordnet ist.

5. Deflektometer (100) nach einem der vorhergehenden Ansprüche, wobei ein Steuersystem des Fallgewichtsdeflektometers dazu konfiguriert ist, eine weitere Verwendung des Fallgewichtsdeflektometers zu verhindern, wenn der Fehleranzeigeausgang (S6, S65, S66) bereitgestellt wird, bevor eine vorgegebene Bedingung erfüllt wird.

6. Deflektometer (100) nach einem der vorhergehenden Ansprüche, wobei die erste Testantwort (O1) ein elektrisches Signal von der Spule (5) umfasst, und wobei die Referenzdaten (REF) aus der ersten Testantwort abgerufene Informationen umfassen.

7. Deflektometer (100) nach einem der vorhergehenden Ansprüche, wobei das Testsignal (T1) eine Schwingung umfasst, die mittels eines Schwingungsgenerators (11), wie etwa eines gesteuerten, externen seismischen Wellengenerators (11), vorzugsweise mittels eines Fallgewichts (12) eines Fallgewichtsdeflektometers, in ein Gehäuse (2, 20) der Geophoneinheit (1) eingeleitet wird.

8. Deflektometer (100) nach einem der vorhergehenden Ansprüche, wobei das Testsignal (T1) ein elektrisches Testsignal umfasst, das mittels eines elektrischen Signalgenerators (13) an die Spule (5) der Geophonsensoranordnung (7) angelegt wird, und wobei die erste Testantwort (O3) eine Testschwingung umfasst, die aufgrund einer Bewegung des Magneten (4) als Reaktion auf das an die Spule (5) angelegte elektrische Testsignal auf das Geophongehäuse (2) übertragen wird.

9. Deflektometer (100) nach Anspruch 8, wobei der elektrische Signalgenerator (13) einen Signalgenerator in der Geophoneinheit (1) umfasst, wie etwa innerhalb eines Gehäuses (20) der Geophoneinheit (1) angeordnet.

10. Deflektometer (100) nach einem der Ansprüche 8-9, wobei das elektrische Testsignal (T1) ein Signal mit einer Frequenz, wie etwa einer gesteuerten Frequenz, zwischen 1 Hz und 200 Hz, vorzugsweise zwischen 5 Hz und 100 Hz, wie etwa zwischen 10Hz und 70 Hz, umfasst.

11. Deflektometer (100) nach einem der vorhergehenden Ansprüche, wobei die erste Testantwort (O3) eine Testschwingung an dem Geophon (1), wie etwa ein Testschwingungssignal in dem Geophongehäuse (2, 20), erzeugt, und wobei der weitere Sensor (ACC) die zweite Testantwort (O2) als Reaktion auf das Testschwingungssignal bereitstellt.

12. Deflektometer (100) nach einem der vorhergehenden Ansprüche, wobei die Referenzdaten (REF) Referenzdaten eines funktionsfähigen Geophons darstellen und/oder wobei die Referenzdaten Kalibrierungsinformationen umfassen.

13. Deflektometer (100) nach einem der vorhergehenden Ansprüche, wobei die Referenzdaten (REF) Gewichtsparameter eines neuronalen Netzes umfassen und/oder wobei die Referenzdaten (REF) Koeffizienten eines mathematischen Modells umfassen.

14. Deflektometer (100) nach einem der vorhergehenden Ansprüche, wobei Informationen einer Vielzahl der Testsignale (T1) und/oder Informationen einer Vielzahl der Testantworten (O1, O2, O3) verwendet werden, um die Referenzdaten (REF) als ein mathematisches Modell zu erstellen und/oder zu aktualisieren.

15. Deflektometer (100) nach einem der vorhergehenden Ansprüche, wobei die Verarbeitung basierend auf zumindest Referenzdaten (REF) und aus der zweiten Testantwort (O2) abgerufenen Informationen eine Korrelationsinformation, wie etwa eine Kreuzkorrelation, von aus der zweiten Testantwort (O2) abgerufenen Informationen und Informationen der Referenzdaten (REF) umfasst.

16. Deflektometer (100) nach einem der vorhergehenden Ansprüche, wobei die Geophonsensoranordnung (7) dazu konfiguriert ist, Schwingungen in einer ersten Erfassungsrichtung (SEDIR) zu erfassen, und wobei der weitere Sensor (ACC) dazu konfiguriert ist, zumindest Schwingungen in derselben, ersten Erfassungsrichtung (SEDIR) zu erfassen.

17. Verfahren zum Erfassen von Zuständen an einer Prüffläche, wie etwa einer Fahrbahnoberfläche, beispielsweise einer Straßenoberfläche, unter Verwendung eines Deflektometers (100), wie etwa eines Fallgewichtsdeflektometers, wobei der Deflektometer (100) umfasst:
- eine Krafterzeugungsanordnung (11), umfassend ein Fallgewicht (12) und eine Lastplatte (14), wobei die Lastplatte (14) zum Übertragen einer Aufprallkraft auf die Prüffläche konfiguriert ist, und wobei die Aufprallkraft mittels des Fallgewichts (12) bereitgestellt wird, und
- eine seismische Sensoranordnung (21), umfassend eine oder mehrere Geophoneinheiten (1), wobei jede der einen oder mehreren Geophoneinheiten (1) ein Gehäuse (2, 20) und eine in dem Gehäuse (2, 20) angeordnete Geophonsensoranordnung (7) umfasst, wobei die Geophonsensoranordnung (7) dazu konfiguriert ist, von der Prüffläche übertragene Schwingungen zu erfassen und darauf basierend einen ersten Sensorausgang (O1) bereitzustellen, wobei die Geophonsensoranordnung (7) eine Spule (5) und einen Magneten (4) umfasst, die dazu konfiguriert sind, sich relativ zueinander zu bewegen, wenn das Geophon (1) den Schwingungen ausgesetzt wird, um den ersten Sensorausgang (O1) bereitzustellen,
wobei der Deflektometer (100) ein Fehlererkennungssystem umfasst, das dazu konfiguriert ist, Fehlerzustände in dem einen oder den mehreren Geophonen (1) zu erkennen, wobei das Fehlererkennungssystem (10, ACC) umfasst:
- eine Datenverarbeitungsanordnung (10, 50), und
- einen oder mehrere weitere Sensoren (ACC), umfassend einen elektronischen Beschleunigungsmesser, der dazu konfiguriert ist, Schwingungen zu erfassen und darauf basierend einen zweiten Sensorausgang (O2) bereitzustellen, wobei der eine oder die mehreren weiteren Sensoren (ACC) an der einen oder den mehreren Geophoneinheiten (1) angeordnet ist/sind,
wobei das Verfahren die Schritte umfasst:
Bereitstellen eines Testsignals (T1), um die Geophonsensoranordnung (7) dazu zu veranlassen, eine erste Testantwort (O1, O3) von der Geophonsensoranordnung (7) bereitzustellen,
Bereitstellen einer zweiten Testantwort (O2) von dem weiteren Sensor (ACC) als Reaktion auf eine durch das Testsignal (T1) verursachte Schwingung,
Verarbeiten von Daten, um zu bestimmen, ob an der Geophoneinheit (1) eine Fehleranzeige aufgetreten ist, wobei die verarbeiteten Daten zumindest auf Referenzdaten (REF) und aus der zweiten Testantwort (O2) abgerufenen Informationen basieren, und Bereitstellen eines Fehleranzeigeausgangs (S6, S56, S66), der eine Anzeige eines Fehlers an der Geophoneinheit (1) darstellt, wenn bestimmt wird, dass die Fehleranzeige auftritt.

## Revendications

1. Déflectomètre (100), tel qu'un déflectomètre à masse tombante, pour détecter des conditions au niveau d'une surface d'essai, telle qu'une surface de chaussée, par exemple une surface de route, dans lequel le déflectomètre (100) comprend :
- un agencement d'induction de force (11) comprenant une masse de chute (12) et une plaque de charge (14), dans lequel la plaque de charge (14) configurée pour transférer une force d'impact à la surface d'essai, et dans lequel la force d'impact est fournie au moyen de la masse de chute (12), et
- un agencement de capteurs sismiques (21) comprenant une ou plusieurs unités de géophone (1), où chacune desdites une ou plusieurs unités de géophone (1) comprend un boîtier (2, 20) et un agencement de capteur de géophone (7) agencé dans le boîtier (2, 20), dans lequel l'agencement de capteur de géophone (7) est configuré pour détecter des vibrations transférées depuis ladite surface d'essai et fournir une première sortie de capteur (O1) sur la base de celles-ci, dans lequel l'agencement de capteur de géophone (7) comprend une bobine (5) et un aimant (4) configurés pour se déplacer l'un par rapport à l'autre lorsque le géophone (1) est soumis auxdites vibrations de manière à fournir ladite première sortie de capteur (O1),
dans lequel le déflectomètre (100) comprend un système de détection de défauts configuré pour détecter des conditions de défaut dans lesdits un ou plusieurs géophones (1), dans lequel ledit système de détection de défauts (10, ACC) comprend :
- un agencement de traitement de données (10, 50), et
- un ou plusieurs capteurs supplémentaires (ACC) comprenant un accéléromètre électronique configuré pour détecter des vibrations et fournir une deuxième sortie de capteur (O2) sur la base de celles-ci, où lesdits un ou plusieurs capteurs supplémentaires (ACC) est/sont agencé(s) au niveau desdites une ou plusieurs unités de géophone (1),
dans lequel l'agencement de capteur de géophone (7) est configuré pour fournir une première réponse d'essai (O1, O3) lorsqu'il est soumis à un signal d'essai (T1), et dans lequel les un ou plusieurs capteurs supplémentaires (ACC) est/sont configuré(s) pour fournir une deuxième réponse d'essai (O2) en réponse à une vibration provoquée par le signal d'essai (T1),
dans lequel l'agencement de traitement de données (10, 50) est configuré pour traiter des données sur la base d'au moins des informations de la deuxième réponse d'essai (O2) et de données de référence (REF) de manière à déterminer si une indication de défaut s'est produite au niveau de l'une desdites une ou plusieurs unités de géophone (1), et
dans lequel l'agencement de traitement de données (10 50) est configuré pour fournir une sortie d'indication de défaut (S6, S56, S66) représentant une indication d'un défaut au niveau d'une unité de géophone (1) si ladite indication de défaut est déterminée comme se produisant.

2. Déflectomètre (100) selon la revendication 1, dans lequel l'agencement de traitement de données (10) comprenant une ou plusieurs unités de traitement de données.

3. Déflectomètre (100) selon l'une quelconque des revendications précédentes, dans lequel un boîtier de géophone (2) d'un géophone (30) est agencé à l'intérieur d'un boîtier d'unité de géophone (20), et dans lequel ledit agencement de traitement de données (10) est agencé dans le boîtier d'unité de géophone (20) à l'extérieur du boîtier de géophone (20).

4. Déflectomètre (100) selon l'une quelconque des revendications précédentes, dans lequel un boîtier de géophone (2) d'un géophone (30) est agencé à l'intérieur d'un boîtier d'unité de géophone (20), et dans lequel ledit capteur supplémentaire est agencé dans le boîtier (20) de l'unité de géophone (1), tel qu'à l'intérieur d'une cavité intérieure de boîtier d'unité (20a), et à l'extérieur du boîtier (2) du géophone (30).

5. Déflectomètre (100) selon l'une quelconque des revendications précédentes, dans lequel un système de commande du déflectomètre à masse tombante est configuré pour empêcher une utilisation ultérieure du déflectomètre à masse tombante si la sortie d'indication de défaut (S6, S65, S66) est fournie, avant qu'une condition prédéfinie soit satisfaite.

6. Déflectomètre (100) selon l'une quelconque des revendications précédentes, dans lequel la première réponse d'essai (O1) comprend un signal électrique provenant de la bobine (5), et dans lequel les données de référence (REF) comprennent des informations extraites de la première réponse d'essai.

7. Déflectomètre (100) selon l'une quelconque des revendications précédentes, dans lequel ledit signal d'essai (T1) comprend une vibration induite dans un boîtier (2, 20) de l'unité de géophone (1) au moyen d'un générateur de vibrations (11), tel qu'un générateur d'ondes sismiques (11) commandé, externe, de préférence au moyen d'une masse tombante (12) d'un déflectomètre à masse tombante.

8. Déflectomètre (100) selon l'une quelconque des revendications précédentes, dans lequel le signal d'essai (T1) comprend un signal d'essai électrique appliqué à la bobine (5) de l'agencement de capteur de géophone (7) au moyen d'un générateur de signal électrique (13), et dans lequel ladite première réponse d'essai (O3) comprend une vibration d'essai transférée au boîtier de géophone (2) en raison du mouvement de l'aimant (4) en réponse audit signal d'essai électrique appliqué à la bobine (5).

9. Déflectomètre (100) selon la revendication 8, dans lequel le générateur de signal électrique (13) comprend un générateur de signal dans l'unité de géophone (1), tel que situé à l'intérieur d'un boîtier (20) de l'unité de géophone (1).

10. Déflectomètre (100) selon l'une quelconque des revendications 8-9, dans lequel le signal d'essai électrique (T1) comprend un signal ayant une fréquence, telle qu'une fréquence commandée, comprise entre 1 Hz et 200 Hz, de préférence entre 5 Hz et 100 Hz, telle qu'entre 10Hz et 70 Hz.

11. Déflectomètre (100) selon l'une quelconque des revendications précédentes, dans lequel la première réponse d'essai (O3) induit une vibration d'essai au niveau du géophone (1), telle qu'un signal de vibration d'essai dans le boîtier de géophone (2, 20), et dans lequel le capteur supplémentaire (ACC) fournit la deuxième réponse d'essai (O2) en réponse au signal de vibration d'essai.

12. Déflectomètre (100) selon l'une quelconque des revendications précédentes, dans lequel les données de référence (REF) représentent des données de référence d'un géophone fonctionnel et/ou dans lequel les données de référence comprennent des informations d'étalonnage.

13. Déflectomètre (100) selon l'une quelconque des revendications précédentes, dans lequel les données de référence (REF) comprennent des paramètres de poids d'un réseau neuronal et/ou dans lequel les données de référence (REF) comprennent des coefficients d'un modèle mathématique.

14. Déflectomètre (100) selon l'une quelconque des revendications précédentes, dans lequel des informations d'une pluralité desdits signaux d'essai (T1) et/ou des informations d'une pluralité desdites réponses d'essai (O1, O2, O3) sont utilisées de manière à établir et/ou mettre à jour lesdites données de référence (REF) sous la forme d'un modèle mathématique.

15. Déflectomètre (100) selon l'une quelconque des revendications précédentes, dans lequel ledit traitement sur la base d'au moins des données de référence (REF) et d'informations extraites de la deuxième réponse d'essai (O2) comprend une information de corrélation, telle qu'une corrélation croisée, d'informations extraites de la deuxième réponse d'essai (O2) et d'informations des données de référence (REF).

16. Déflectomètre (100) selon l'une quelconque des revendications précédentes, dans lequel l'agencement de capteur de géophone (7) est configuré pour détecter des vibrations dans une première direction de détection (SEDIR), et dans lequel le capteur supplémentaire (ACC) est configuré pour au moins détecter des vibrations dans la même, première direction de détection (SEDIR).

17. Procédé de détection de conditions au niveau d'une surface d'essai, telle qu'une surface de chaussée, par exemple une surface de route en utilisant un déflectomètre (100), tel qu'un déflectomètre à masse tombante, dans lequel le déflectomètre (100) comprend :
- un agencement d'induction de force (11) comprenant une masse de chute (12) et une plaque de charge (14), dans lequel la plaque de charge (14) configurée pour transférer une force d'impact à la surface d'essai, et dans lequel la force d'impact est fournie au moyen de la masse de chute (12), et
- un agencement de capteurs sismiques (21) comprenant une ou plusieurs unités de géophone (1), dans lequel chacune desdites une ou plusieurs unités de géophone (1) comprend un boîtier (2, 20) et un agencement de capteur de géophone (7) agencé dans le boîtier (2, 20), dans lequel l'agencement de capteur de géophone (7) est configuré pour détecter des vibrations transférées depuis ladite surface d'essai et fournir une première sortie de capteur (O1) sur la base de celles-ci, dans lequel l'agencement de capteur de géophone (7) comprend une bobine (5) et un aimant (4) configurés pour se déplacer l'un par rapport à l'autre lorsque le géophone (1) est soumis auxdites vibrations de manière à fournir ladite première sortie de capteur (O1),
dans lequel le déflectomètre (100) comprend un système de détection de défauts configuré pour détecter des conditions de défaut dans lesdits un ou plusieurs géophones (1), dans lequel ledit système de détection de défauts (10, ACC) comprend :
- un agencement de traitement de données (10, 50), et
- un ou plusieurs capteurs supplémentaires (ACC) comprenant un accéléromètre électronique configuré pour détecter des vibrations et fournir une deuxième sortie de capteur (O2) sur la base de celles-ci, dans lequel lesdits un ou plusieurs capteurs supplémentaires (ACC) est/sont agencé(s) au niveau desdites une ou plusieurs unités de géophone (1),
dans lequel le procédé comprend les étapes consistant à :
fournir un signal d'essai (T1) de manière à amener l'agencement de capteur de géophone (7) à fournir une première réponse d'essai (O1, O3) depuis l'agencement de capteur de géophone (7),
fournir une deuxième réponse d'essai (O2) depuis le capteur supplémentaire (ACC) en réponse à une vibration provoquée par le signal d'essai (T1),
traiter des données de manière à déterminer si une indication de défaut s'est produite au niveau de l'unité de géophone (1), dans lequel lesdites données traitées sont basées sur au moins des données de référence (REF) et des informations extraites de la deuxième réponse d'essai (O2), et
fournir une sortie d'indication de défaut (S6, S56, S66) représentant une indication d'un défaut au niveau de l'unité de géophone (1) si ladite indication de défaut est déterminée comme se produisant.
